# EUROPEAN PATENT APPLICATION

(11) **EP 4 806 744 A1**
(43) Date of publication of application: **16.09.2026**
(21) Application number: 24888053.6
(22) Date of filing: 07.11.2024
(51) Int. Cl.: B60W 30/06

(54) **PARKING METHOD, PARKING EXITING METHOD, PROCESSING APPARATUS, VEHICLE, AND STORAGE MEDIUM**

(30) Priority: 08.11.2023 CN 202311483221
(71) Applicant: BYD Company Limited, Shenzhen, Guangdong 518118 (CN)
(72) Inventor: YANG, Dongsheng, Shenzhen, Guangdong 518118 (CN); TU, Xiaoxiao, Shenzhen, Guangdong 518118 (CN); WANG, Xinbo, Shenzhen, Guangdong 518118 (CN); ZHANG, Yu, Shenzhen, Guangdong 518118 (CN); LIU, Jiangtao, Shenzhen, Guangdong 518118 (CN)
(74) Representative: Mathys & Squire
(86) International application number: PCT/CN2024/130535
(87) International publication number: WO 2025/098442

(57) **Abstract**

A parking method, a pulling-out method, a processing apparatus, a vehicle, and a storage medium are provided. The parking method includes: obtaining information of a current pose point of the vehicle, location information of a first parking slot, and surrounding environmental information of the first parking slot; determining a target parking path of the vehicle based on the information of the current pose point of the vehicle, the location information of the first parking slot, and the surrounding environmental information of the first parking slot; and controlling, based on the target parking path, the vehicle to perform parking.

## Description

This application claims priority to Chinese Patent Application No. 202311483221.4, filed with the China National Intellectual Property Administration on November 08, 2023 and entitled "PARKING METHOD AND RELATED APPARATUS", which is incorporated herein by reference in its entirety.

### TECHNICAL FIELD

This application relates to the field of vehicle control technologies, and in particular, to a parking method, a pulling-out method, a processing apparatus, a vehicle, and a storage medium.

### BACKGROUND

With the progress of industrial technologies and the improvement of people's living standards, automobiles are playing an increasingly important role in people's daily life as transportation means, and consumers' demand for automobiles is also growing.

With the advent of an intelligent driving era, an increasing quantity of consumers are beginning to consider using intelligent automobiles. Automatic parking assist is a technical method to resolve parking-in problems. In a parking process, movement of a conventional vehicle is subject to a kinematic constraint and a nonholonomic dynamic constraint. Consequently, the vehicle cannot slip in a traveling and moving process. For example, the vehicle cannot implement instantaneous lateral movement, a front-drive vehicle needs to rely on steering of front wheels to implement operations such as lane change and steering and cannot be at an excessive speed on a bend, and so on.

However, a traveling path that meets the kinematic constraint and the nonholonomic dynamic constraint usually requires a large space. When a user uses intelligent driving, if a space is narrow and small and cannot meet the foregoing requirements, a conventional traveling path of the vehicle usually cannot be planned in advance. As a result, automatic parking fails, which lead to poor user experience of automatic parking and low efficiency of automatic parking.

### SUMMARY

Embodiments of this application provide a parking method, a pulling-out method, a processing apparatus, a vehicle, and a storage medium, to better implement parking in a narrow environment, for example, parking in a dead-end road scenario or a narrow passage scenario. A parking path is divided into two phases: a pre-parking-in path and a parking-in path, so that efficiency of automatic parking can be effectively improved, and user experience can be improved.

According to a first aspect, an embodiment of this application provides a parking method. The method is applied to control parking of a vehicle. The vehicle includes a plurality of wheels and a plurality of motors, and each of the plurality of wheels is controlled by one of the plurality of motors. The parking method includes:
obtaining information of a current pose point of the vehicle, location information of a first parking slot, and surrounding environmental information of the first parking slot;
determining a target parking path of the vehicle based on the information of the current pose point of the vehicle, the location information of the first parking slot, and the surrounding environmental information of the first parking slot, wherein the target parking path includes a conventional traveling path and a rotation path, the conventional traveling path includes at least one of a straight traveling path or a curved traveling path, the rotation path is a path formed by the vehicle rotating around a center of mass of the vehicle, and rotation of the vehicle is implemented by controlling the plurality of wheels by the plurality of motors respectively; and
controlling, based on the target parking path, the vehicle to perform parking.

In this embodiment of this application, four-wheel independent steering motors are used, and all four wheels of the vehicle can be independently controlled. On the basis of supporting the conventional traveling path, the rotation path formed by the vehicle rotating in place around the center of mass can be implemented, to break a conventional nonholonomic kinematic constraint of the vehicle. In this way, the vehicle can effectively travel on a path that is less than a minimum turning radius and even discontinuous, which greatly improves flexibility, passability, and a movement capability of the vehicle, to better cope with a narrow parking environment, such as a dead-end road scenario or a narrow passage scenario.

In addition, compared with some path methods for automatic parking, this application divides, by combining a plurality of planning methods such as conventional path planning, in-place rotation of four motors, and rotation around a single wheel of the vehicle, parking path planning into two phases: pre-parking-in planning and parking-in planning. This can effectively improve automatic parking efficiency and improve user experience.

In a possible implementation of the first aspect, a turning radius of the vehicle that corresponds to the curved traveling path is greater than or equal to the minimum turning radius of the vehicle, a turning radius of the vehicle that corresponds to the rotation path is less than the minimum turning radius of the vehicle, and the minimum turning radius may be a turning radius obtained when the vehicle performs steering control with a front wheel at a maximum steering angle and the four wheels rotating in a same direction.

In another possible implementation of the first aspect, the surrounding environment information of the first parking slot is configured to indicate information of an obstacle near the first parking slot, and the rotation path satisfies no obstacle being in a range of the rotation path.

In another possible implementation of the first aspect, the parking method further includes:
determining an available parking space of the vehicle based on the information of the obstacle around the first parking slot;
determining at least one available rotation space in the available parking space based on a size of the vehicle;
determining one or more rotation locations in the at least one available rotation space, and determining a rotation path formed by the vehicle rotating around the center of mass of the vehicle at the one or more rotation locations;
planning a first conventional traveling path based on the information of the current pose point of the vehicle and a rotation location of the one or more rotation locations that is closest to the current pose point;
planning a second conventional traveling path based on a location of the first parking slot and a rotation location of the one or more rotation locations that is closest to the location of the first parking slot; and
when there are a plurality of rotation locations, planning a conventional traveling path between the plurality of rotation locations.

The foregoing provides a method of planning a parking path. In this implementation, the vehicle can sense an environment in which the vehicle is located and an environment near the parking slot, determine the available rotation space, and then flexibly determine the one or more rotation locations in the available rotation space according to a requirement, to complete parking-in planning. An attitude angle of the vehicle can be flexibly and conveniently adjusted through rotation of the vehicle around the center of mass. Therefore, in this implementation, when there is an available rotation space, a parking path including a rotation path is planned as much as possible, rotation can even be performed a plurality of times, and parking can also be performed under difficult parking conditions such as a narrow road and a dead-end road, which significantly improves a success rate of planning the parking path and improves efficiency of automatic parking.

In another possible implementation of the first aspect, determining the target parking path of the vehicle based on the information of the current pose point of the vehicle, the location information of the first parking slot, and the surrounding environmental information of the first parking slot includes:

inputting the information of the current pose point of the vehicle, the location information of the first parking slot, and the surrounding environmental information of the first parking slot to a rotation parking-in planning model, wherein the rotation parking-in planning model is applied to plan a parking path based on the available parking space, the rotation parking-in planning model is obtained through training based on training samples, and the training samples include pose point data of the vehicle, location data of a parking slot, surrounding environmental data of the parking slot, and evaluation information of the parking path; and
obtaining the target parking path output by the rotation parking-in planning model.

The foregoing provides another implementation of planning the parking path. With help of a model training method, the rotation parking-in planning model can be trained based on a large amount of parking-in data. When the model is applied to the vehicle, a parking-in path can be quickly planned with reference to a current environment, and parking can also be performed under difficult parking conditions such as a narrow road and a dead-end road, which significantly improves the success rate of planning the parking path, improves efficiency of automatic parking, and improves vehicle intelligence.

In another possible implementation of the first aspect, the parking method further includes:
determining a first rotation location in the at least one available rotation space;
planning the first conventional traveling path and a first rotation path based on the information of the current pose point of the vehicle and the first rotation location;
determining a conventional traveling path from an end point of the first rotation path to the first parking slot;
if the conventional traveling path from the end point of the first rotation path to the first parking slot is unable to be determined, determining a second rotation location in the at least one available rotation space;
planning the second conventional traveling path and a second rotation path based on the end point of the first rotation path and the second rotation location;
determining a conventional traveling path from an end point of the second rotation path to the first parking slot; and
repeating the foregoing operations until a conventional traveling path from an end point of the rotation path to the first parking slot is determined.

The foregoing implementation allows for a plurality of attempts at parking paths. Through repeated attempts at different parking paths, the success rate of planning the parking path can be improved, and efficiency of automatic parking can be effectively improved.

In another possible implementation of the first aspect, the parking method further includes:
planning a first target parking path based on the available parking space of the vehicle, the size of the vehicle, and the information of the current pose point of the vehicle, wherein the first target parking path includes one conventional traveling path and one rotation path;
when the first target parking path is unable to be planned, planning a second target parking path based on the available parking space of the vehicle, the size of the vehicle, and the information of the current pose point of the vehicle, wherein the second target parking path includes two conventional traveling paths and two rotation paths;
when the first target parking path and the second target parking path are unable to be planned, planning a third target parking path based on the available parking space of the vehicle, the size of the vehicle, and the information of the current pose point of the vehicle, wherein the third target parking path includes three conventional traveling paths and three rotation paths; and
when the first target parking path, the second target parking path, and the third target parking path are unable to be planned, planning a fourth target parking path based on the available parking space of the vehicle, the size of the vehicle, and the information of the current pose point of the vehicle, wherein the fourth target parking path includes two conventional traveling paths and one rotation path.

In this way, a parking path with a small quantity of conventional paths and a small quantity of rotation paths is first attempted to be planned, and when planning fails, the quantity is continuously increased, so that a waste of resources is reduced, efficiency of planning the parking path can be improved, and efficiency of automatic parking can be effectively improved.

In another possible implementation of the first aspect, the target parking path includes a pre-parking-in path and a parking-in path, the pre-parking-in path is a path from the current pose point to a parking-in preparation pose point, and the parking-in path is a path from the parking-in preparation pose point to a target pose point; and
at least one of the pre-parking-in path or the parking-in path includes the rotation path.

In another possible implementation of the first aspect,
the current pose point is a pose point at which a rear axle center of the vehicle is currently located, and the target parking path includes a first pre-parking-in path and a first parking-in path, wherein
the first pre-parking-in path includes a first conventional traveling path and a first rotation path, the first conventional traveling path is a path formed from the current pose point to a first parking-in preparation pose point, the first parking-in preparation pose point is a pose point at which the rear axle center of the vehicle is located before the vehicle rotates, and the first rotation path is a path formed by rotating around the center of mass of the vehicle at the first parking-in preparation pose point; and
the first parking-in path is a path formed from a second parking-in preparation pose point to the target pose point, the second parking-in preparation pose point is a pose point at which the rear axle center of the vehicle is located after the vehicle rotates, and the target pose point is a pose point at which the rear axle center of the vehicle is located after the vehicle is parked into the first parking slot.

In another possible implementation of the first aspect,
a lateral distance between the first parking-in preparation pose point and a center of a parking-in edge of the first parking slot meets a first condition;
a location of the center of mass of the vehicle is related to a location of the first parking-in preparation pose point; and
a rotation radius of the first rotation path is related to a length of the vehicle, a width of the vehicle, and a safety distance of the vehicle.

In another possible implementation of the first aspect, the lateral distance between the first parking-in preparation pose point and the center of the parking-in edge of the first parking slot satisfies the following formula: *l*₁<*x_{A}<l*₂

The location of the center of mass of the vehicle and the location of the first parking-in preparation pose point satisfy the following formula: ${x}_{veh} = {x}_{A} + \frac{1}{2} {l}_{wheelbase} \times cos \left({θ}_{A}\right)$ ${y}_{veh} = {y}_{A} + \frac{1}{2} {l}_{wheelbase} \times sin \left({θ}_{A}\right)$ ${θ}_{veh} = {θ}_{A}$

The rotation radius of the first rotation path satisfies the following formula: ${R}_{vot} = \frac{1}{2} \sqrt{\left({l}^{2}+{w}^{2}\right)} + {dis}_{safe}$

A rotation angle of the rotation path satisfies the following formula: ${θ}_{vot} = {θ}_{B} - {θ}_{A}$

In another possible implementation of the first aspect, the parking method further includes:
determining a plurality of parking-in paths based on the target pose point, a kinematic constraint, and a nonholonomic dynamic constraint; and
determining a parking-in path with minimum cost in the plurality of parking-in paths as the first parking-in path.

In this way, a path corresponding to a minimum cost value of cost values of the parking-in paths is selected as an optimal path, to obtain a parking-in path that has a small in-place rotation angle and a short parking-in distance and is away from the obstacle, and plan the parking-in path as the first parking-in path. Because a target parking location of the vehicle is usually narrower than an initial location of the vehicle, a pulling-out path may be searched for to reversely generate the parking path, so that an end point of the path can be found more quickly, and algorithm search efficiency can be improved.

In another possible implementation of the first aspect, the current pose point is a pose point at which the center of mass of the vehicle is currently located, and the target parking path includes a second pre-parking-in path and a second parking-in path, wherein

the second pre-parking-in path includes a first rotation path and a first conventional traveling path, the first rotation path is a path formed by rotating around the center of mass of the vehicle at the current pose point, the first conventional traveling path is a conventional traveling path from the current pose point to a first parking-in preparation pose point, and the first parking-in preparation pose point is located on a centerline of the first parking slot; and
the second parking-in path includes a second rotation path and a second conventional traveling path, the second rotation path is a path formed by rotating around the center of mass of the vehicle at the first parking-in preparation pose point, the second conventional traveling path is a conventional traveling path from the first parking-in preparation pose point to the target pose point, and the target pose point is located at a center of the first parking slot.

In another possible implementation of the first aspect, a longitudinal distance between the first parking-in preparation pose point and a center of a parking-in edge of the first parking slot meets a second condition; and
rotation radii of the first rotation path and the second rotation path are related to a length of the vehicle, a width of the vehicle, and a safety distance of the vehicle.

In another possible implementation of the first aspect, the longitudinal distance between the first parking-in preparation pose point and the center of the parking-in edge of the first parking slot satisfies the following formula: ${y}_{min} \leq {y}_{A} \leq {y}_{max}$ ${y}_{max} = min \left({y}_{up _ obs}, {y}_{rd}\right) - \left(\sqrt{\left({l}^{2}+{w}^{2}\right)}/2.0+{dis}_{safe}\right)$ ${y}_{min} = max \left({y}_{down _ obs}, 0\right) + \left(\sqrt{\left({l}^{2}+{w}^{2}\right)}/2.0+{dis}_{safe}\right)$

The rotation radii of the first rotation path and the second rotation path satisfy the following formula: ${R}_{vot} = \frac{1}{2} \sqrt{\left({l}^{2}+{w}^{2}\right)} + {dis}_{safe}$

A rotation angle of the first rotation path satisfies the following formula: ${θ}_{vot} = {θ}_{PA} - {θ}_{P}$

In this way, through second rotation, the attitude angle of the vehicle is kept consistent with an attitude angle of the parking slot. During subsequent parking, the vehicle can travel along a trajectory such as a straight line to be directly parked in a target parking slot, so that efficiency of automatic parking can be effectively improved, and user experience can be improved.

In another possible implementation of the first aspect, the current pose point is a pose point at which the center of mass of the vehicle is currently located, and the target parking path includes a third pre-parking-in path and a third parking-in path, wherein

the third pre-parking-in path includes a first rotation path, a first conventional traveling path, a second rotation path, and a second conventional traveling path, the first rotation path is a path formed by rotating around the center of mass of the vehicle at the current pose point, the first conventional traveling path is a conventional traveling path from the current pose point to a first parking-in preparation pose point, the first parking-in preparation pose point is located on either side of a centerline of the first parking slot, the second rotation path is a path formed by rotating around the center of mass of the vehicle at the first parking-in preparation pose point, the second conventional traveling path is a conventional traveling path from the first parking-in preparation pose point to a second parking-in preparation pose point, and the second parking-in preparation pose point is located on the centerline of the first parking slot; and

the third parking-in path includes a third rotation path and a third conventional traveling path, the third rotation path is a path formed by rotating around the center of mass of the vehicle at the second parking-in preparation pose point, the third conventional traveling path is a conventional traveling path from the second parking-in preparation pose point to the target pose point, and the target pose point is located at a center of the first parking slot.

In another possible implementation of the first aspect,
a lateral distance between the first parking-in preparation pose point and a center of a parking-in edge of the first parking slot meets a first condition;
a longitudinal distance between the first parking-in preparation pose point and the center of the parking-in edge of the first parking slot meets a second condition;
a longitudinal distance between the second parking-in preparation pose point and the center of the parking-in edge of the first parking slot meets a third condition; and
rotation radii of the first rotation path, the second rotation path, and the third rotation path are related to a length of the vehicle, a width of the vehicle, and a safety distance of the vehicle.

In another possible implementation of the first aspect, the lateral distance between the first parking-in preparation pose point and the center of the parking-in edge of the first parking slot satisfies the following formula: *l*₁*<x_{A}<l*₂

The longitudinal distance between the first parking-in preparation pose point and the center of the parking-in edge of the first parking slot satisfies the following formula: ${y}_{min} \leq {y}_{A} \leq {y}_{max}$ ${y}_{max} = min \left({y}_{up _ obs}, {y}_{rd}\right) - \left(\sqrt{\left({l}^{2}+{w}^{2}\right)}/2.0+{dis}_{safe}\right)$ ${y}_{min} = max \left({y}_{down _ obs}, 0\right) + \left(\sqrt{\left({l}^{2}+{w}^{2}\right)}/2.0+{dis}_{safe}\right)$

The longitudinal distance between the second parking-in preparation pose point and the center of the parking-in edge of the first parking slot satisfies the following formula: ${y}_{A} > {y}_{B} > {y}_{C}$

The rotation radii of the first rotation path, the second rotation path, and the third rotation path satisfy the following formula: ${R}_{vot} = \frac{1}{2} \sqrt{\left({l}^{2}+{w}^{2}\right)} + {dis}_{safe}$

A rotation angle of the first rotation path satisfies the following formula: ${θ}_{vot} = {θ}_{PA} - {θ}_{P}$

A rotation angle of the second rotation path satisfies the following formula: ${θ}_{vot} = {θ}_{BA} - {θ}_{A}$

In this way, through second rotation and third rotation, the attitude angle of the vehicle is kept consistent with an attitude angle of the parking slot. During subsequent parking, the vehicle can travel along a trajectory such as a straight line to be directly parked in a target parking slot, so that efficiency of automatic parking can be effectively improved, and user experience can be improved.

In another possible implementation of the first aspect, the current pose point is a pose point at which the center of mass of the vehicle is currently located, and the target parking path includes a fourth pre-parking-in path and a fourth parking-in path, wherein

the fourth pre-parking-in path includes a first conventional traveling path, the first conventional traveling path is a path formed by traveling from the current pose point to a first parking-in preparation pose point, and the first parking-in preparation pose point is located at a center of the first parking slot; and

the fourth parking-in path includes a first rotation path, the first rotation path is a path formed by rotating around the center of mass of the vehicle at the first parking-in preparation pose point, and after rotation, the attitude angle of the vehicle is the same as an attitude angle of the first parking slot, a rotation radius of the first rotation path is related to a length of the vehicle, a width of the vehicle, and a safety distance of the vehicle.

According to a second aspect, an embodiment of this application provides a pulling-out method. The method is applied to control parking of a vehicle. The vehicle includes a plurality of wheels and a plurality of motors, and each of the plurality of wheels is controlled by one of the plurality of motors. The pulling-out method includes:
obtaining information of a current pose point of the vehicle, pulling-out location information, and surrounding environmental information of a first parking slot;
determining a target pulling-out path of the vehicle based on the information of the current pose point of the vehicle, the pulling-out location information, and the surrounding environmental information of the first parking slot, wherein the target pulling-out path includes a conventional traveling path and a rotation path, the conventional traveling path includes at least one of a straight traveling path or a curved traveling path, the rotation path is a path formed by the vehicle rotating around a center of mass of the vehicle, and rotation of the vehicle is implemented by controlling the plurality of wheels by the plurality of motors respectively; and
controlling, based on the target pulling-out path, the vehicle to pull out of the first parking slot.

In a possible implementation of the second aspect, a turning radius of the vehicle that corresponds to the curved traveling path is greater than or equal to a minimum turning radius of the vehicle, a turning radius of the vehicle that corresponds to the rotation path is less than the minimum turning radius of the vehicle, and the minimum turning radius is a turning radius obtained when the vehicle performs steering control with a front wheel at a maximum steering angle and four wheels rotating in a same direction.

In another possible implementation of the second aspect, the surrounding environmental information of the first parking slot is configured to indicate information of an obstacle around the first parking slot, and the rotation path satisfies no obstacle being in a range of the rotation path. The pulling-out method further includes:
determining an available parking space of the vehicle based on the information of the obstacle around the first parking slot;
determining at least one available rotation space in the available parking space based on a size of the vehicle;
determining one or more rotation locations in the at least one available rotation space, and determining a rotation path formed by the vehicle rotating around the center of mass of the vehicle at the one or more rotation locations;
planning a third conventional traveling path based on the information of the current pose point of the vehicle and a rotation location of the one or more rotation locations that is closest to the current pose point;
planning a fourth conventional traveling path based on the pulling-out location information and a rotation location of the one or more rotation locations that is closest to a pulling-out location; and
when there are a plurality of rotation locations, planning a conventional traveling path between the plurality of rotation locations.

According to a third aspect, an embodiment of this application provides a processing apparatus. The processing apparatus is assembled in a vehicle, the vehicle includes a plurality of wheels and a plurality of motors, each of the plurality of wheels is controlled by one of the plurality of motors, and the processing apparatus includes an obtaining unit and a processing unit.

The obtaining unit is configured to obtain information of a current pose point of the vehicle, location information of a first parking slot, and surrounding environmental information of the first parking slot.

The processing unit is configured to:
determine a target parking path of the vehicle based on the information of the current pose point of the vehicle, the location information of the first parking slot, and the surrounding environmental information of the first parking slot, wherein the target parking path includes a conventional traveling path and a rotation path, the conventional traveling path includes at least one of a straight traveling path or a curved traveling path, the rotation path is a path formed by the vehicle rotating around a center of mass of the vehicle, and rotation of the vehicle is implemented by controlling the plurality of wheels by the plurality of motors respectively; and
control, based on the target parking path, the vehicle to perform parking.

In a possible implementation of the third aspect, a turning radius of the vehicle that corresponds to the curved traveling path is greater than or equal to a minimum turning radius of the vehicle, a turning radius of the vehicle that corresponds to the rotation path is less than the minimum turning radius of the vehicle, and the minimum turning radius is a turning radius obtained when the vehicle performs steering control with a front wheel at a maximum steering angle and four wheels rotating in a same direction.

In another possible implementation of the third aspect, the surrounding environment information of the first parking slot is configured to indicate information of an obstacle around the first parking slot, and the rotation path satisfies no obstacle being in a range of the rotation path.

In another possible implementation of the third aspect, the processing unit is further configured to:
determine an available parking space of the vehicle based on the information of the obstacle around the first parking slot;
determine at least one available rotation space in the available parking space based on a size of the vehicle;
determine one or more rotation locations in the at least one available rotation space, and determine a rotation path formed by the vehicle rotating around the center of mass of the vehicle at the one or more rotation locations;
plan a first conventional traveling path based on the information of the current pose point of the vehicle and a rotation location of the one or more rotation locations that is closest to the current pose point;
plan a second conventional traveling path based on a location of the first parking slot and a rotation location of the one or more rotation locations that is closest to the location of the first parking slot; and
when there are a plurality of rotation locations, plan a conventional traveling path between the plurality of rotation locations.

In another possible implementation of the third aspect, the processing unit is further configured to: input the information of the current pose point of the vehicle, the location information of the first parking slot, and the surrounding environmental information of the first parking slot to a rotation parking-in planning model, wherein the rotation parking-in planning model is applied to plan a parking path based on the available parking space, the rotation parking-in planning model is obtained through training based on training samples, and the training samples include pose point data of the vehicle, location data of a parking slot, surrounding environmental data of the parking slot, and evaluation information of the parking path; and
the obtaining unit is further configured to obtain the target parking path output by the rotation parking-in planning model.

In another possible implementation of the third aspect, the processing unit is further configured to:
determine a first rotation location in the at least one available rotation space;
plan the first conventional traveling path and a first rotation path based on the information of the current pose point of the vehicle and the first rotation location;
determine a conventional traveling path from an end point of the first rotation path to the first parking slot;
if the conventional traveling path from the end point of the first rotation path to the first parking slot is unable to be determined, determine a second rotation location in the at least one available rotation space;
plan the second conventional traveling path and a second rotation path based on the end point of the first rotation path and the second rotation location;
determine a conventional traveling path from an end point of the second rotation path to the first parking slot; and
repeat the foregoing operations until a conventional traveling path from an end point of the rotation path to the first parking slot is determined.

In another possible implementation of the third aspect, the processing unit is further configured to:
plan a first target parking path based on the available parking space of the vehicle, the size of the vehicle, and the information of the current pose point of the vehicle, wherein the first target parking path includes one conventional traveling path and one rotation path;
when the first target parking path is unable to be planned, plan a second target parking path based on the available parking space of the vehicle, the size of the vehicle, and the information of the current pose point of the vehicle, wherein the second target parking path includes two conventional traveling paths and two rotation paths;
when the first target parking path and the second target parking path are unable to be planned, plan a third target parking path based on the available parking space of the vehicle, the size of the vehicle, and the information of the current pose point of the vehicle, wherein the third target parking path includes three conventional traveling paths and three rotation paths; and
when the first target parking path, the second target parking path, and the third target parking path are unable to be planned, plan a fourth target parking path based on the available parking space of the vehicle, the size of the vehicle, and the information of the current pose point of the vehicle, wherein the fourth target parking path includes two conventional traveling paths and one rotation path.

In another possible implementation of the third aspect,
the current pose point is a pose point at which a rear axle center of the vehicle is currently located, and the target parking path includes a first pre-parking-in path and a first parking-in path, wherein
the first pre-parking-in path includes a first conventional traveling path and a first rotation path, the first conventional traveling path is a path formed from the current pose point to a first parking-in preparation pose point, the first parking-in preparation pose point is a pose point at which the rear axle center of the vehicle is located before the vehicle rotates, and the first rotation path is a path formed by rotating around the center of mass of the vehicle at the first parking-in preparation pose point; and
the first parking-in path is a path formed from a second parking-in preparation pose point to a target pose point, the second parking-in preparation pose point is a pose point at which the rear axle center of the vehicle is located after the vehicle rotates, and the target pose point is a pose point at which the rear axle center of the vehicle is located after the vehicle is parked into the first parking slot.

In another possible implementation of the third aspect,
a lateral distance between the first parking-in preparation pose point and a center of a parking-in edge of the first parking slot meets a first condition;
a location of the center of mass of the vehicle is related to a location of the first parking-in preparation pose point; and
a rotation radius of the first rotation path is related to a length of the vehicle, a width of the vehicle, and a safety distance of the vehicle.

In another possible implementation of the third aspect, the processing unit is further configured to:
determine a plurality of parking-in paths based on the target pose point, a kinematic constraint, and a nonholonomic dynamic constraint; and
determine a parking-in path with minimum cost in the plurality of parking-in paths as the first parking-in path.

In another possible implementation of the third aspect, the current pose point is a pose point at which the center of mass of the vehicle is currently located, and the target parking path includes a second pre-parking-in path and a second parking-in path, wherein
the second pre-parking-in path includes a first rotation path and a first conventional traveling path, the first rotation path is a path formed by rotating around the center of mass of the vehicle at the current pose point, the first conventional traveling path is a conventional traveling path from the current pose point to a first parking-in preparation pose point, and the first parking-in preparation pose point is located on a centerline of the first parking slot; and
the second parking-in path includes a second rotation path and a second conventional traveling path, the second rotation path is a path formed by rotating around the center of mass of the vehicle at the first parking-in preparation pose point, the second conventional traveling path is a conventional traveling path from the first parking-in preparation pose point to a target pose point, and the target pose point is located at a center of the first parking slot.

In another possible implementation of the third aspect, a longitudinal distance between the first parking-in preparation pose point and a center of a parking-in edge of the first parking slot meets a second condition; and
rotation radii of the first rotation path and the second rotation path are related to a length of the vehicle, a width of the vehicle, and a safety distance of the vehicle.

In another possible implementation of the third aspect,
the current pose point is a pose point at which the center of mass of the vehicle is currently located, and the target parking path includes a third pre-parking-in path and a third parking-in path, wherein
the third pre-parking-in path includes a first rotation path, a first conventional traveling path, a second rotation path, and a second conventional traveling path, the first rotation path is a path formed by rotating around the center of mass of the vehicle at the current pose point, the first conventional traveling path is a conventional traveling path from the current pose point to a first parking-in preparation pose point, the first parking-in preparation pose point is located on either side of a centerline of the first parking slot, the second rotation path is a path formed by rotating around the center of mass of the vehicle at the first parking-in preparation pose point, the second conventional traveling path is a conventional traveling path from the first parking-in preparation pose point to a second parking-in preparation pose point, and the second parking-in preparation pose point is located on the centerline of the first parking slot; and
the third parking-in path includes a third rotation path and a third conventional traveling path, the third rotation path is a path formed by rotating around the center of mass of the vehicle at the second parking-in preparation pose point, the third conventional traveling path is a conventional traveling path from the second parking-in preparation pose point to a target pose point, and the target pose point is located at a center of the first parking slot.

In another possible implementation of the third aspect,
a lateral distance between the first parking-in preparation pose point and a center of a parking-in edge of the first parking slot meets a first condition;
a longitudinal distance between the first parking-in preparation pose point and the center of the parking-in edge of the first parking slot meets a second condition;
a longitudinal distance between the second parking-in preparation pose point and the center of the parking-in edge of the first parking slot meets a third condition; and
rotation radii of the first rotation path, the second rotation path, and the third rotation path are related to a length of the vehicle, a width of the vehicle, and a safety distance of the vehicle.

In another possible implementation of the third aspect, the current pose point is a pose point at which the center of mass of the vehicle is currently located, and the target parking path includes a fourth pre-parking-in path and a fourth parking-in path, wherein
the fourth pre-parking-in path includes a first conventional traveling path, the first conventional traveling path is a path formed by traveling from the current pose point to a first parking-in preparation pose point, and the first parking-in preparation pose point is located at a center of the first parking slot; and
the fourth parking-in path includes a first rotation path, the first rotation path is a path formed by rotating around the center of mass of the vehicle at the first parking-in preparation pose point, and after rotation, an attitude angle of the vehicle is the same as an attitude angle of the first parking slot, a rotation radius of the first rotation path is related to a length of the vehicle, a width of the vehicle, and a safety distance of the vehicle.

According to a fourth aspect, an embodiment of this application provides a processing apparatus. The processing apparatus is assembled in a vehicle. The vehicle includes a plurality of wheels and a plurality of motors. Each of the plurality of wheels is controlled by one of the plurality of motors. The processing apparatus includes a processor and a memory. The processor executes instructions stored in the memory, to enable the processing apparatus to implement the method described in any implementation of the first aspect.

Optionally, the processing apparatus further includes a communication interface. The communication interface is configured to receive and/or send data, and/or the communication interface is configured to provide input and/or output for the processor.

It will be noted that, the foregoing embodiment is described by using an example in which a processor (or referred to as a general-purpose processor) specified by a computer to perform the method is invoked. In a specific implementation process, the processor may alternatively be a dedicated processor. In this case, the computer instructions are preloaded into the processor. Optionally, the processor may alternatively include both a dedicated processor and a general-purpose processor.

Optionally, the processor and the memory may alternatively be integrated into one device. That is, the processor and the memory may alternatively be integrated together.

According to a fifth aspect, this application provides a vehicle. The vehicle includes a plurality of wheels, a plurality of motors, and the foregoing processing apparatus. Each of the plurality of wheels is controlled by one of the plurality of motors. The processing apparatus is electrically coupled to the plurality of motors. The processing apparatus is configured to implement the method described in any implementation of the first aspect.

According to a sixth aspect, an embodiment of this application provides a computer-readable storage medium. The computer-readable storage medium stores instructions. When the instructions are run by a processing apparatus, the processing apparatus is enabled to implement the method described in any implementation of the first aspect.

According to a seventh aspect, this application provides a computer program product. The computer program product includes computer instructions. When the instructions are run by a processing apparatus, the processing apparatus is enabled to implement the method described in any implementation of the first aspect.

Optionally, the computer program product may be a software installation package or an image file. When the foregoing method needs to be applied, the computer program product may be obtained and executed on a compute device.

For beneficial effects of the technical solutions provided in the second aspect to the seventh aspect of this application, refer to beneficial effects of the technical solutions in the first aspect. Details are not described herein again.

### DESCRIPTION OF DRAWINGS

The following briefly describes the accompanying drawings used for describing embodiments.
FIG. 1 is a diagram of an architecture of a vehicle according to an embodiment of this application;
FIG. 2 is a diagram of a conventional traveling path according to an embodiment of this application;
FIG. 3 is a schematic flowchart of a parking method according to an embodiment of this application;
FIG. 4 is a diagram of a possible parking lot according to an embodiment of this application;
FIG. 5 is a diagram of a possible parking-in path cluster according to an embodiment of this application;
FIG. 6 is a diagram of a possible target parking path according to an embodiment of this application;
FIG. 7 is a diagram of a possible target parking path according to another embodiment of this application;
FIG. 8 is a diagram of a possible target parking path according to another embodiment of this application;
FIG. 9 is a schematic flowchart of a parking method according to another embodiment of this application;
FIG. 10 is a diagram of a structure of a processing apparatus according to an embodiment of this application;
FIG. 11 is a diagram of a structure of a processing apparatus according to another embodiment of this application; and
FIG. 12 is a diagram of a structure of a vehicle according to an embodiment of this application.

### DETAILED DESCRIPTION OF PREFERRED EMBODIMENTS

The following describes embodiments of this application in detail with reference to accompanying drawings.

The following describes a system architecture to which embodiments of this application are applied. It will be noted that the system architecture and the service scenario described in this application are intended to describe technical solutions in this application more clearly, and do not constitute a limitation on technical solutions provided in this application. A person of ordinary skill in the art may know that technical solutions provided in this application are also applicable to a similar technical problem with evolution of the system architecture and emergence of a new service scenario.

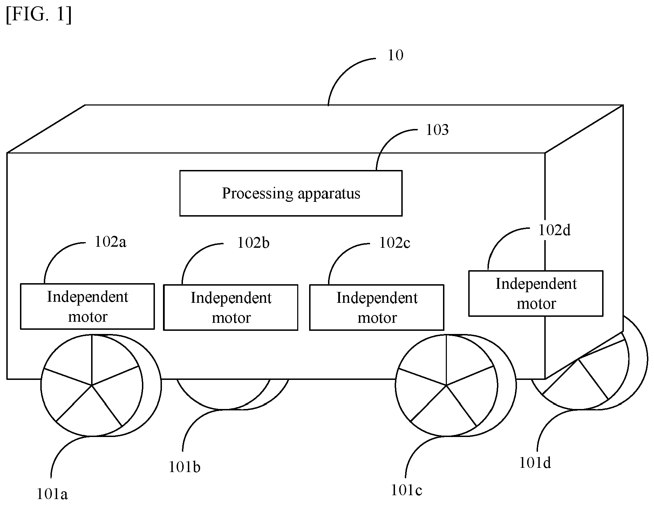

Referring to FIG. 1, FIG. 1 is a diagram of an architecture of a vehicle according to an embodiment of this application. As shown in FIG. 1, the vehicle 10 includes a plurality of wheels, a plurality of independent motors, and a processing apparatus 103.

The vehicle 10 is an apparatus with a traveling capability provided in this application for example. For example, the vehicle 10 includes but is not limited to vehicles that may be of different models, such as an automobile, a truck, a bus, a van, and an electric vehicle.

The wheel is used to support and drive the vehicle and may include a wheel and a tire. As shown in FIG. 1, the vehicle may include a wheel 101a, a wheel 101b, a wheel 101c, and a wheel 101d. A quantity of wheels is merely an example. In a specific implementation process, the vehicle may include more or fewer wheels.

The independent motor is configured to control steering of the wheel. In the vehicle 10, each wheel may be controlled by an independent motor, so that the vehicle 10 can implement a plurality of movement modes such as different directions of front and rear wheels, in-place rotation, and a same direction of the front and rear wheels. Optionally, an independent motor may alternatively control one or more wheels. As shown in FIG. 1, the vehicle may include an independent motor 102a, an independent motor 102b, an independent motor 102c, and an independent motor 102d. A quantity of independent motors is merely an example. In a specific implementation process, the vehicle may include more or fewer independent motors.

The processing apparatus 103 is a module with a data processing capability. In a possible implementation, the processing apparatus 103 may be a physical device. For example, the processing apparatus 103 may include one or more of the following modules: a central processing unit (CPU), a microprocessor (MPU), an application-specific integrated circuit (ASIC), a field programmable gate array (FPGA), a complex programmable logic device (CPLD), a synergistic processing unit (assisting the central processing unit in completing corresponding processing and application), a microcontroller unit (MCU), a mobile data center (MDC), an electronic control unit and/or the like. Certainly, the foregoing description is provided by using an example in which the processing apparatus 103 is a vehicle-mounted device.

In some embodiments, the processing apparatus 103 may be a physical device disposed outside the vehicle, for example, a server, a cloud, or a host. In a possible implementation, the processing apparatus 103 may be a software module, for example, a virtual machine, software, program code, or a container.

As mentioned in the foregoing embodiment, the processing apparatus 103 may be disposed outside the vehicle. It will be understood that, when the processing apparatus 103 is disposed outside the vehicle 10, the vehicle 10 may be communicatively connected to the processing apparatus 103. For example, the vehicle 10 is indirectly connected to the processing apparatus 103 through wireless communication, such as an ultra-wideband (UWB) technology, a long term evolution communication technology, a 5th generation mobile communication technology (5th generation mobile networks or 5th generation wireless systems, wherein 5th-generation is briefly referred to as 5G or 5G technology), a global system for mobile communications (GSM), a general packet radio service (GPRS), or a universal mobile telecommunications system (UMTS).

The following describes scenarios related in embodiments of this application.

In some scenarios, movement of a vehicle is subject to a kinematic constraint and a nonholonomic dynamic constraint. Consequently, the vehicle cannot slip in a traveling and moving process. For example, the vehicle cannot implement instantaneous lateral movement, a front-drive vehicle needs to rely on steering of front wheels to implement operations such as lane change and steering and cannot be at an excessive speed on a bend, and so on. To satisfy these constraints, a path of the vehicle needs to satisfy the following.

(1) Path continuity constraint: a location and curvature of a traveling trajectory need to be able to be continuously transferred to an original traveling trajectory at a start location and an end location. (2) Kinematic constraint: the vehicle has a minimum turning radius. Therefore, a radius of curvature at any point of the traveling trajectory is greater than or equal to the minimum turning radius.

(3) Nonholonomic dynamic constraint: the nonholonomic dynamic constraint prevents the vehicle from sideslipping or rolling, and restricts lateral acceleration, a yaw rate, and lateral jerk.

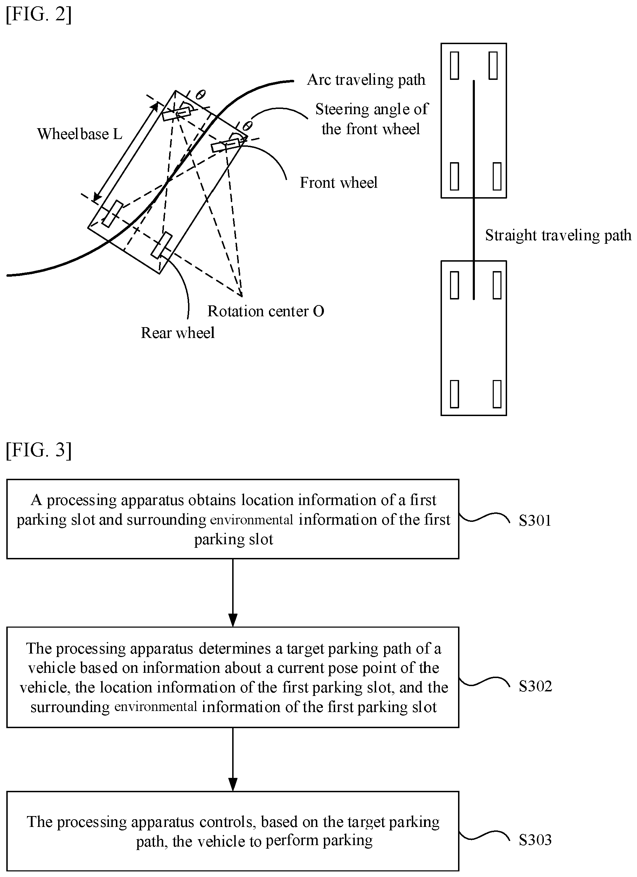

Due to the foregoing requirements, the vehicle may travel only on a conventional traveling path, wherein the conventional traveling path conforms to the kinematic constraint and the nonholonomic dynamic constraint. Referring to FIG. 2, FIG. 2 is a diagram of a conventional traveling path according to an embodiment of this application. As shown in FIG. 2, the conventional traveling path may include an arc traveling path and a straight traveling path. Optionally, the conventional traveling path may further include a traveling path such as a combination of the straight traveling path and the arc traveling path, and a high-order continuous smooth curved traveling path. However, a traveling path that meets the foregoing requirements usually requires a large space. When a user uses intelligent driving, if a space is narrow and small and cannot meet the foregoing requirements, a conventional traveling path of a vehicle usually cannot be planned in advance. As a result, automatic parking failures, which lead to poor user experience of automatic parking and low efficiency of automatic parking. When the user uses manual parking, if the space is narrow and small and cannot meet the foregoing requirements, the user usually expects to repeatedly perform parking maneuver adjustment (which is a process of stopping, through a moving-forward action and/or a moving-backward action of the vehicle, the vehicle in the middle of a parking slot with a better attitude without collision) to continuously adjust a vehicle direction to complete parking into the parking slot. In addition, in a process of parking into the parking slot, because the space is limited, a collision risk is greatly increased, parking safety is low, and parking efficiency of the user is low.

In view of this, this application is applied to a vehicle with four-wheel independent steering. Four-wheel independent steering motors are used, and all four wheels of the vehicle can be independently controlled. On the basis of supporting a conventional traveling path, rotation of the vehicle in place around a center of mass, around a single wheel of the vehicle, and the like can be implemented, to break a conventional nonholonomic kinematic constraint of the vehicle. In this way, the vehicle can effectively travel on a path that is less than a minimum turning radius and even discontinuous, which greatly improves flexibility, passability, and a movement capability of the vehicle, to better cope with a narrow parking environment, such as a dead-end road scenario (that is, a specific small area is not connected to a road from another established road network, and a vehicle on a dead-end road cannot enter another traffic route) or a narrow passage scenario. In addition, compared with some path methods for automatic parking, this application divides, by combining a plurality of planning methods such as conventional path planning, in-place rotation of four motors, and rotation around a single wheel of the vehicle, parking path planning into two phases: pre-parking-in planning and parking-in planning. This can effectively improve automatic parking efficiency and improve user experience.

The following describes in detail the method in embodiments of this application.

Referring to FIG. 3, FIG. 3 is a schematic flowchart of a parking method according to an embodiment of this application. Optionally, the method may be applied to control parking of a vehicle, and is applied to a processing apparatus. For example, the method may be applied to the processing apparatus 103 shown in FIG. 1.

The parking method shown in FIG. 3 may include a plurality of operations in operations S301 to S303. It will be understood that, for ease of description in this application, a sequence of operations S301 to S303 is used for description, but this is not intended to limit execution necessarily performed in the sequence. An execution sequence, execution time, a quantity of execution times, and the like of the foregoing one or more operations are not limited in this embodiment of this application Operations S301 to S303 are specifically as follows.

S301: the processing apparatus obtains location information of a first parking slot and surrounding environmental information of the first parking slot.

For example, the processing apparatus further obtains information of a current pose point of the vehicle.

The processing apparatus is an apparatus that has a data processing capability and a communication capability. The processing apparatus may be disposed inside the vehicle, or may be a processing module, for example, an MDC or an MCU, integrated into the vehicle, or may be disposed outside the vehicle, for example, a server, a cloud, or a host, or may be a virtual apparatus, for example, a virtual machine, software, program code, or a container. The vehicle may be a vehicle mounted with a plurality of wheels and a plurality of independent motors. Each wheel may be controlled by an independent motor, so that the vehicle can implement a plurality of movement modes such as different directions of front and rear wheels, in-place rotation, and a same direction of the front and rear wheels. Optionally, an independent motor may alternatively control one or more wheels. For example, the vehicle includes but is not limited to vehicles that may be of different models, such as an automobile, a truck, a bus, a van, and an electric vehicle.

In a possible implementation, the processing apparatus may obtain location information of a parking slot in the parking lot and surrounding environmental information of the parking slot in the parking lot. The surrounding environmental information of the parking slot in the parking lot is configured to indicate information of an obstacle around the parking slot in the parking lot. For example, the surrounding environmental information of the parking slot in the parking lot may indicate a quantity of parking slots in the parking lot, whether a vehicle is parked in each parking slot, obstacles (for example, a stone column, a stake, and a wall) in the parking lot, location information of the obstacles in the parking lot, and the like. Optionally, the parking slot in the parking lot includes the first parking slot, and the surrounding environmental information of the parking slot in the parking lot includes the surrounding environmental information of the first parking slot. The first parking slot is an available parking slot in the parking lot, and the location information of the first parking slot and the location information of the obstacle in the parking lot may be represented in a form of point, line, bounding box, or the like. A layout diagram of each parking slot and obstacle in the parking lot may be constructed by establishing a coordinate system or the like. The surrounding environmental information of the first parking slot is configured to indicate information of an obstacle around the first parking slot.

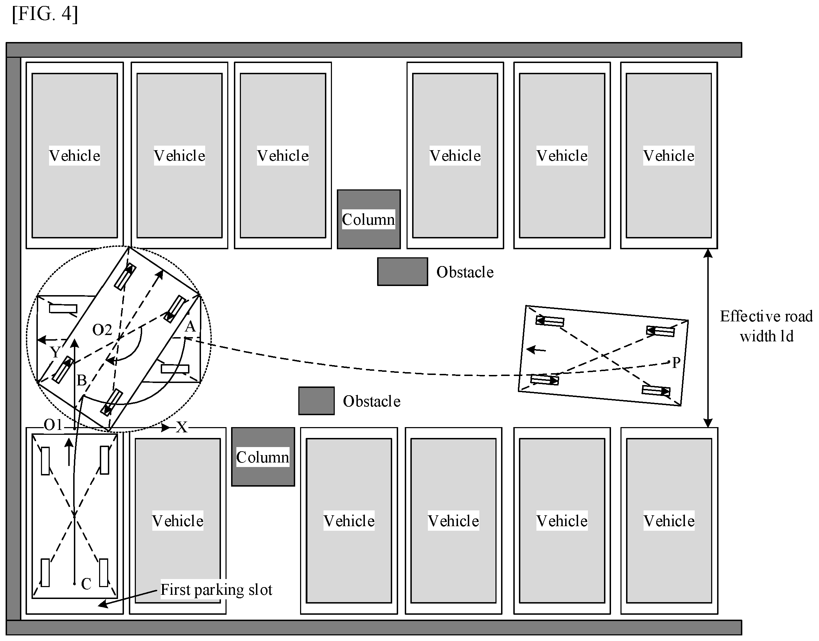

For example, referring to FIG. 4, FIG. 4 is a diagram of a possible parking lot according to an embodiment of this application. As shown in FIG. 4, the parking lot includes a first parking slot, the first parking slot is a target parking slot of the vehicle, and the parking lot further includes two obstacles. The processing apparatus may obtain location information of the first parking slot in the parking lot in advance, wherein the location information of the first parking slot includes location information of a target pose point. In FIG. 4, the target pose point is a point C. The processing apparatus determines whether the target parking slot (the first parking slot) is a four motor-parkable scenario (where the four motor-parkable scenario includes but is not limited to a dead-end road scenario or a narrow passage scenario). If the target parking slot is not a four motor-parkable scenario, the processing apparatus may plan a conventional traveling path for parking. If the target parking slot is a four motor-parkable scenario, the processing apparatus needs to plan a parking path that combines a conventional traveling path and a rotation path for parking. In FIG. 4, the location information of the first parking slot may be represented by using a Cartesian coordinate system. For example, the Cartesian coordinate system is established by using a center of a parking-in edge of the first parking slot as an origin O1, and location information of a point C may be represented as (*x_{C},y_{C},θ_{C}*)*.*

S302: the processing apparatus determines a target parking path of the vehicle based on the information of the current pose point of the vehicle, the location information of the first parking slot, and the surrounding environmental information of the first parking slot.

The target parking path includes a conventional traveling path and a rotation path. The conventional traveling path conforms to a kinematic constraint and a nonholonomic dynamic constraint, the rotation path is a path formed by the vehicle rotating around a center of mass of the vehicle, and rotation of the vehicle is implemented by controlling a plurality of wheels by a plurality of motors respectively. The conventional traveling path includes at least one of a straight traveling path or a curved traveling path. A turning radius of the vehicle that corresponds to the curved traveling path is greater than or equal to a minimum turning radius of the vehicle, a turning radius of the vehicle that corresponds to the rotation path is less than the minimum turning radius of the vehicle, and the minimum turning radius is a turning radius obtained when the vehicle performs steering control with a front wheel at a maximum steering angle and the plurality of wheels (for example, the four wheels) rotating in a same direction.

In a possible implementation, the processing apparatus may determine the target parking path of the vehicle based on current pose information of the vehicle, the location information of the first parking slot, and the surrounding environmental information of the first parking slot, where the current pose information of the vehicle includes the information of the current pose point of the vehicle and is configured to indicate the current pose point of the vehicle, and the surrounding environmental information of the first parking slot is configured to indicate the information of the obstacle around the first parking slot.

The following describes several specific implementations of determining the target parking path by using examples.

Implementation 1: the processing apparatus determines an available parking space of the vehicle based on the information of the obstacle near the first parking slot; and determines one or more rotation locations in the available parking space, and determines a rotation path formed by the vehicle rotating around the center of mass of the vehicle at each of the one or more rotation locations. The processing apparatus plans a first conventional traveling path based on the information of the current pose point of the vehicle and a rotation location of the one or more rotation locations that is closest to the current pose point; and plans a second conventional traveling path based on a location of the first parking slot and a rotation location of the one or more rotation locations that is closest to the location of the first parking slot.

Optionally, determining the one or more rotation locations in the available parking space includes: the processing apparatus determines at least one available rotation space in the available parking space based on a size of the vehicle, and determines one rotation location in each of the at least one available rotation space. It will be noted that, in this application, the available parking space represents a space in which the vehicle is allowed to perform actions such as moving forward, moving backward, and rotating in a parking process without collision, and the available rotation space represents a space in which the vehicle is allowed to perform a rotation action without collision.

Optionally, when there is one determined rotation location, the target parking path includes the first conventional traveling path, the second conventional traveling path, and the rotation path formed by rotating at the rotation location.

Optionally, when there are a plurality of rotation locations, a conventional traveling path between the plurality of rotation locations is planned. The target parking path includes conventional traveling paths and rotation paths. The conventional traveling paths include the first conventional traveling path, the second conventional traveling path, and the conventional traveling path between the plurality of rotation locations. There are a plurality of rotation paths, that is, rotation paths formed by rotating at the plurality of rotation locations.

Implementation 2: the processing apparatus inputs the information of the current pose point of the vehicle, the location information of the first parking slot, and the surrounding environment information of the first parking slot to a rotation parking-in planning model, and directly obtains the target parking path output by the rotation parking-in planning model. Optionally, the processing apparatus performs model training by using pose point data of the vehicle, location data of a parking slot, surrounding environmental data of the parking slot, evaluation information of a parking path, and the like as training samples, to obtain the rotation parking-in planning model. The rotation parking-in planning model is applied to plan the parking path based on the available parking space.

Implementation 3: the processing apparatus may determine a first rotation location in at least one available rotation space, and plan a first conventional traveling path and a first rotation path based on the information of the current pose point of the vehicle and the first rotation location, so that the processing apparatus determines a conventional traveling path from an end point of the first rotation path to the first parking slot. When there is only the first rotation location, the target parking path includes the first conventional traveling path, the rotation path formed by rotating at the first rotation location, and the conventional traveling path from the end point of the first rotation path to the first parking slot.

Optionally, if the conventional traveling path from the end point of the first rotation path to the first parking slot is unable to be determined, the processing apparatus determines a second rotation location in the at least one available rotation space, and plans a second conventional traveling path and a second rotation path based on the end point of the first rotation path and the second rotation location. The processing apparatus determines a conventional traveling path from an end point of the second rotation path to the first parking slot.

Optionally, the processing apparatus may further discard the first rotation location, redetermine two rotation locations in the at least one available rotation space, and plan the target parking path based on the two rotation locations, the information of the current pose point of the vehicle, and the location information of the first parking slot. When the two rotation locations are included, the target parking path includes the first conventional traveling path, the rotation paths formed by rotating at the first rotation location and the second rotation location respectively, the conventional traveling path between the two rotation locations, and the conventional traveling path from the end point of the second rotation path to the first parking slot.

The processing apparatus may continuously repeat the foregoing operations until a conventional traveling path from an end point of the rotation path to the first parking slot is determined, or until a parking path from the current pose point of the vehicle to the first parking slot is determined.

Implementation 4: the processing apparatus may plan a first target parking path based on an available parking space of the vehicle, a size of the vehicle, and the information of the current pose point of the vehicle, where the first target parking path (for example, a target parking path in Example 4 below) includes one conventional traveling path and one rotation path. When the first target parking path is unable to be planned, the processing apparatus plans a second target parking path based on the available parking space of the vehicle, the size of the vehicle, and the information of the current pose point of the vehicle, where the second target parking path (for example, a target parking path in Example 2 below) includes two conventional traveling paths and two rotation paths. When the first target parking path and the second target parking path are unable to be planned, the processing apparatus plans a third target parking path based on the available parking space of the vehicle, the size of the vehicle, and the information of the current pose point of the vehicle, where the third target parking path (for example, a target parking path in Example 3 below) includes three conventional traveling paths and three rotation paths. When the first target parking path, the second target parking path, and the third target parking path are unable to be planned, the processing apparatus plans a fourth target parking path based on the available parking space of the vehicle, the size of the vehicle, and the information of the current pose point of the vehicle, where the fourth target parking path (for example, a target parking path in Example 1 below) includes two conventional traveling paths and one rotation path.

It will be understood that the foregoing implementations are examples, and there may be more implementations in a specific implementation process. In addition, a plurality of implementations may be combined.

In this way, the target parking path of the vehicle may be planned in a plurality of implementations. Therefore, preliminarily screening may be performed, based on evaluated pre-parking time, on the planned parking paths corresponding to the foregoing plurality of implementations. For example, a planning result with shortest parking time is preferentially selected as the target parking path. This can effectively improve efficiency and safety of automatic parking and improve user experience.

For ease of understanding, the following describes several examples of the target parking path.

Example 1: the current pose information of the vehicle includes the current pose point of the vehicle, the current pose point is a pose point (for example, a point P in FIG. 4) at which a rear axle center of the vehicle is currently located, and the target parking path includes a first pre-parking-in path and a first parking-in path. The first pre-parking-in path includes a first conventional traveling path and a first rotation path. The first conventional traveling path belongs to the conventional traveling path, and the first conventional traveling path is a path (for example, a path PA in FIG. 4) formed by the vehicle from the current pose point to a first parking-in preparation pose point. The first parking-in preparation pose point is a pose point (for example, a point A in FIG. 4) at which the rear axle center of the vehicle is located before the vehicle rotates. The first rotation path is a path (for example, a path AB in FIG. 4) formed by the vehicle rotating around the center of mass of the vehicle at the first parking-in preparation pose point to a second parking-in preparation pose point. The first parking-in path is a path (for example, a path BC in FIG. 4) formed by the vehicle from the second parking-in preparation pose point to a target pose point. The second parking-in preparation pose point is a pose point (for example, a point B in FIG. 4) at which the rear axle center of the vehicle is located after the vehicle rotates. The target pose point is a pose point (for example, a point C in FIG. 4) at which the rear axle center of the vehicle is located after the vehicle is parked into the first parking slot.

For example, as shown in FIG. 4, the processing apparatus obtains the current pose information of the vehicle, and obtains, from the current pose information of the vehicle, location information of the pose point at which the rear axle center of the vehicle is currently located. For example, location information of the point P in FIG. 4 is (*xₚ,yₚ,θₚ*). The processing apparatus plans the first conventional traveling path PA for the vehicle to travel from the point P to the first parking-in preparation pose point A, where the first conventional traveling path PA conforms to the kinematic constraint and the nonholonomic dynamic constraint. A lateral distance between the first parking-in preparation pose point A and the center of the parking-in edge of the first parking slot meets a first condition. That is, a horizontal coordinate *x_{A}* of the point A meets the first condition. The first condition is *l*₁*<x_{A}*<*l*₂, where *l*₁ and *l*₂ are configurable parameters and may be preset parameters, and *l*₁ and *l*₂ may be related to a length of the vehicle, a width of the vehicle, a width of the first parking slot, or the like. For example, location information of the point A in FIG. 4 is (*x_{A},y_{A},θ_{A}*). Optionally, the first parking-in preparation pose point A may be determined based on the method in the foregoing Implementation 1 to Implementation 4.

In a possible implementation, the processing apparatus plans the first conventional traveling path PA in the following methods: an Ackerman turning geometry method, a search-based path planning algorithm, a path planning algorithm based on sampling and search, and other algorithms.

For example, the Ackerman turning geometry method includes a method such as a straight-line and arc combination curve, a Dubins curve, a Reeds-Sheep curve, a helical line, or the like. The search-based path planning algorithm includes a Hybrid A Star algorithm or the like. The path planning algorithm based on sampling and search includes an algorithm such as a Kinodynamic rapidly exploring random tree (RRT) path planning algorithm.

Further, the processing apparatus plans the first rotation path AB. The first rotation path AB is a rotation path formed by the vehicle rotating around a first rotation center O2 (for example, the center of mass of the vehicle) at the first parking-in preparation pose point A by a first angle *θᵥₒₜ* with a first rotation radius *Rᵥₒₜ* to the second parking-in preparation pose point B. Because a location of the first rotation center is related to a location of the first parking-in preparation pose point, the processing apparatus may determine the location of the first rotation center (namely, a location of the O2) based on the location of the first parking-in preparation pose point (namely, a location of the point A). The first rotation radius *Rᵥₒₜ* is related to the length of the vehicle, the width of the vehicle, and a safety distance of the vehicle, and the first rotation radius *Rᵥₒₜ* needs to satisfy: during rotation around the first rotation center O2, there is no obstacle in a range of the rotation radius. For example, the first rotation center O2(*xᵥₑₕ,yᵥₑₕ,θᵥₑₕ*) and the first rotation radius *Rᵥₒₜ* may be calculated according to the following Formula (1), Formula (2), Formula (3), and Formula (4): ${x}_{veh} = {x}_{A} + \frac{1}{2} {l}_{wheelbase} \times cos \left({θ}_{A}\right)$ ${y}_{veh} = {y}_{A} + \frac{1}{2} {l}_{wheelbase} \times sin \left({θ}_{A}\right)$ ${θ}_{veh} = {θ}_{A}$ ${R}_{vot} = \frac{1}{2} \sqrt{\left({l}^{2}+{w}^{2}\right)} + {dis}_{safe}$

*l* indicates the length of the vehicle, W indicates the width of the vehicle, *l_{wheelbase}* indicates a wheelbase, and *dis_{safe}* indicates the safety distance.

The first angle *θᵥₒₜ* may be calculated according to the following Formula (5): ${θ}_{vot} = {θ}_{B} - {θ}_{A}$

A location of the point B is (*x_{B},y_{B},θ_{B}*), *θ_{B}* indicates an attitude angle of the vehicle at the point B, and *θ_{A}* indicates an attitude angle of the vehicle at the point A. When selecting the location of the point B, the processing apparatus may first plan the first parking-in path BC, to obtain the location of the point B.

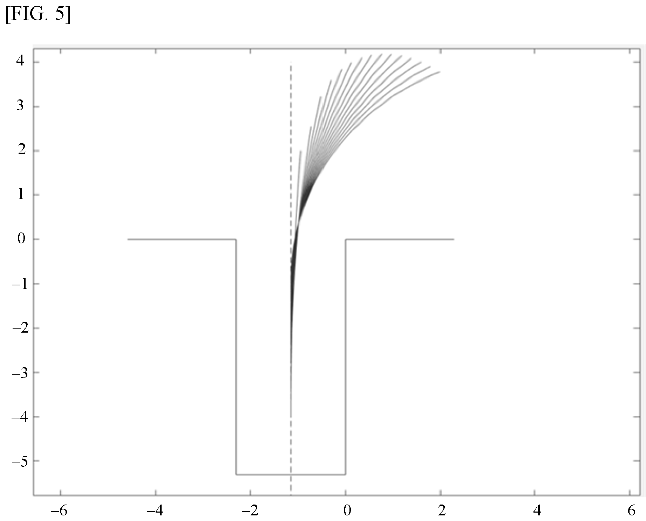

For example, when planning the first parking-in path BC, the processing apparatus may determine a plurality of parking-in paths based on the target pose point, the kinematic constraint, and the nonholonomic dynamic constraint, and determine the first parking-in path based on the plurality of parking-in paths. The first parking-in path is a parking-in path with minimum cost in the plurality of parking-in paths. For example, the processing apparatus may interchange a search start point and a search target point, and reversely perform path search, to obtain a parking-in path. For example, the processing apparatus performs path search at the point C. Using a parking-in end point C(*x_{C}*,*y_{C},θ_{C}*) as a start point, the processing apparatus plans, in a reverse pulling-out method, a parking-in path cluster BCS that satisfies the kinematic constraint and the nonholonomic dynamic constraint of the vehicle, and selects a path with minimum cost from BCS as the parking-in path BC. Referring to FIG. 5, FIG. 5 is a diagram of a possible parking-in path cluster according to an embodiment of this application. As shown in FIG. 5, path search is performed at a search start point, and there are a plurality of paths that satisfy the kinematic constraint and the nonholonomic dynamic constraint of the vehicle. The processing apparatus may select a path with minimum cost from the plurality of paths as the first parking-in path. Cost of each of the plurality of paths may be calculated according to the following Formula (6): $cost = {k}_{1} \times s + {k}_{2} \times α + {k}_{3} \times θ$

S indicates a trajectory distance length, *α* indicates a distance between a vehicle body and an obstacle, and *θ* indicates an in-place rotation angle. *k*₁, *k*₂, and *k*₃ are cost coefficients corresponding to the parameters. During calculation, the cost coefficients are properly set to calculate cost values *cost* of parking-in paths in the parking-in path cluster.

The processing apparatus selects a path corresponding to a minimum cost value *cost* of the cost values *cost* of the parking-in paths as an optimal path. In this way, the processing apparatus obtains a parking-in path that has a small in-place rotation angle and a short parking-in distance and is away from the obstacle, and plans the parking-in path as the first parking-in path BC. Because a target parking location of the vehicle is usually narrower than an initial location of the vehicle, a pulling-out path is searched for to reversely generate the parking path, so that an end point of the path can be found more quickly, and algorithm search efficiency can be improved.

In this way, the processing apparatus can obtain the location of the point B, and can further plan the first rotation path AB based on the location of the point B.

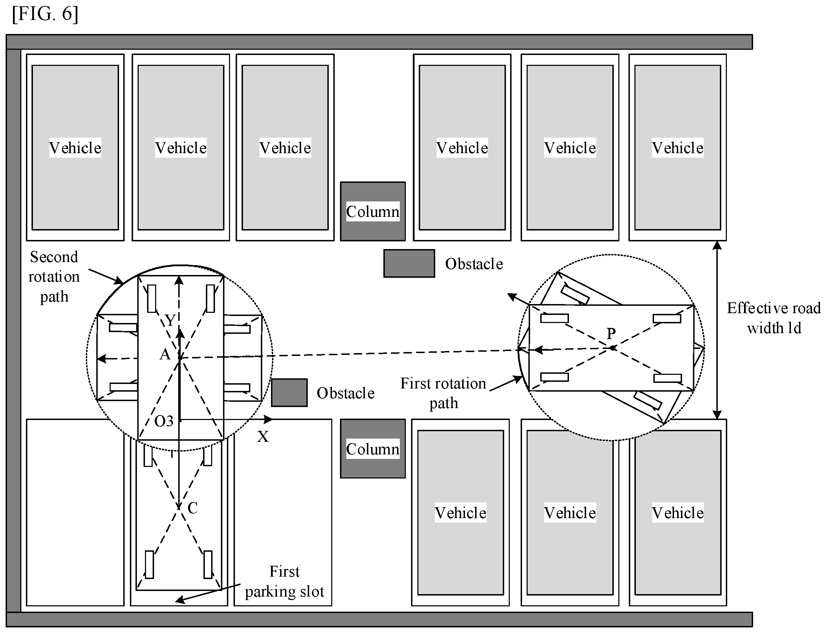

Example 2: referring to FIG. 6, FIG. 6 is a diagram of a possible target parking path according to an embodiment of this application. The current pose information of the vehicle includes the current pose point of the vehicle, the current pose point is a pose point (for example, a point P in FIG. 6) at which the center of mass of the vehicle is currently located, and the target parking path includes a second pre-parking-in path and a second parking-in path. The second pre-parking-in path includes a first rotation path and a first conventional traveling path. The first rotation path is a path (for example, a first rotation path in FIG. 6) formed by the vehicle rotating around the center of mass (namely, the current pose point) of the vehicle at the current pose point. After first rotation of the vehicle, a direction in which the vehicle moves forward is the same as a direction of a connection line between the current pose point and a first parking-in preparation pose point (for example, in FIG. 6, a direction in which the vehicle moves forward is the same as a direction of a vector PA). The first parking-in preparation pose point (for example, a point A in FIG. 6) is located on a centerline of the first parking slot. The first conventional traveling path belongs to the conventional traveling path, and the first conventional traveling path is a path (for example, a path PA in FIG. 6) formed from the current pose point to the first parking-in preparation pose point after the first rotation of the vehicle. In other words, the first conventional traveling path is a straight path from the current pose point to the first parking-in preparation pose point.

The second parking-in path includes a second rotation path and a second conventional traveling path, and the second rotation path is a path (for example, a second rotation path in FIG. 6) formed by the vehicle rotating around the center of mass of the vehicle (namely, the first parking-in preparation pose point) for a second time at the first parking-in preparation pose point. After the second rotation, a direction in which the vehicle moves forward is the same as a direction of a connection line between a target pose point and the first parking-in preparation pose point (for example, in FIG. 6, a direction in which the vehicle moves forward is the same as a direction of a vector CA). The second conventional traveling path belongs to the conventional traveling path, and the second conventional traveling path is a path (for example, a path AC in FIG. 6) formed by the vehicle traveling straight from the first parking-in preparation pose point to the target pose point after the second rotation. The target pose point is a pose point (for example, a point C in FIG. 6) at which a center of the first parking slot is located. In other words, the second conventional traveling path is a straight path from the first parking-in preparation pose point to the target pose point.

For example, as shown in FIG. 6, in FIG. 6, the location information of the first parking slot may be represented by using a Cartesian coordinate system. For example, the Cartesian coordinate system is established by using the center of the parking-in edge of the first parking slot as an origin O3, and location information of the point C may be represented as (*x_{C},y_{C},θ_{C}*). The processing apparatus obtains the current pose information of the vehicle, and obtains, from the current pose information of the vehicle, location information of the pose point at which the center of mass of the vehicle is currently located. For example, location information of the point P in FIG. 6 is (*x_{P},y_{P},θ_{P}*). The processing apparatus plans the first rotation path (for example, the first rotation path in FIG. 6) formed by rotating around the point P at the point P by a first angle with a first rotation radius, so that after the first rotation of the vehicle, the direction in which the vehicle moves forward is the same as the direction of the vector PA. The first rotation radius *Rᵥₒₜ* is related to a length of the vehicle, a width of the vehicle, and a safety distance of the vehicle, and the first rotation radius *Rᵥₒₜ* needs to satisfy: during rotation around a first rotation center, namely, the point **P,** there is no obstacle in a range of the rotation radius. The first parking-in preparation pose point (for example, the point A in FIG. 6) is located on the centerline of the first parking slot, and a longitudinal distance between the first parking-in preparation pose point A and the center of the parking-in edge of the first parking slot meets a second condition. That is, a vertical coordinate of the point A meets the second condition. Optionally, the first parking-in preparation pose point A may be determined based on the method in the foregoing Implementation 1 to Implementation 4. Location information of the point A is (*x_{A},y_{A},θ_{A}*), and the second condition is *yₘᵢₙ* ≤*y_{A}≤yₘₐₓ,* where *yₘᵢₙ* and *yₘₐₓ* may be obtained through calculation according to the following Formula (7) and Formula (8): ${y}_{max} = min \left({y}_{up _ obs}, {y}_{rd}\right) - \left(\sqrt{\left({l}^{2}+{w}^{2}\right)}/2.0+{dis}_{safe}\right)$ ${y}_{min} = max \left({y}_{down _ obs}, 0\right) + \left(\sqrt{\left({l}^{2}+{w}^{2}\right)}/2.0+{dis}_{safe}\right)$

*y_{up_obs}* indicates longitudinal coordinates of all obstacles above the vehicle, *y*_{*down*_*obs*} indicates longitudinal coordinates of all obstacles below the vehicle, *y_{rd}* indicates a longitudinal coordinate of an upper edge of a road, *l* indicates the length of the vehicle, and W indicates the width of the vehicle. For related parameters, refer to the foregoing descriptions.

The first angle *θᵥₒₜ* may be calculated according to the following Formula (9): ${θ}_{vot} = {θ}_{PA} - {θ}_{P}$

*θ_{PA}* indicates a vector angle of the vector *P̅ A̅,* and *θ_{P}* indicates an attitude angle of the vehicle at the point P.

The processing apparatus plans the straight path, namely, the first conventional traveling path (for example, the path PA in FIG. 6), formed from the current pose point to the first parking-in preparation pose point after the first rotation of the vehicle. The first conventional traveling path belongs to the conventional traveling path.

Further, the processing apparatus plans the second rotation path at the first parking-in preparation pose point, namely, the second rotation path (for example, the second rotation path in FIG. 6) formed by the vehicle rotating around the point A at the point A by a second angle with the first rotation radius, so that after the second rotation of the vehicle, the direction in which the vehicle moves forward is the same as the direction of the vector CA. The second rotation path satisfies: during the second rotation around the first parking-in preparation pose point (namely, the point A in FIG. 6), there is no obstacle in a range of the rotation radius. For details about related parameters, refer to the foregoing descriptions.

The second angle *θᵥₒₜ* may be calculated according to the following Formula (10): ${θ}_{vot} = {θ}_{CA} - {θ}_{A}$

*θ_{CA}* indicates a vector angle of the vector *̅C̅ A̅*̅ , and *θ_{A}* indicates an attitude angle of the vehicle at the point A.

The processing apparatus plans the straight path, namely, the second conventional traveling path (for example, the path AC in FIG. 6) formed from the first parking-in preparation pose point to the target pose point after the second rotation of the vehicle. The second conventional traveling path belongs to the conventional traveling path.

In this way, through the second rotation, the attitude angle of the vehicle is kept consistent with an attitude angle of the parking slot. During subsequent parking, the vehicle can travel along a straight line to be directly parked in a target parking slot, so that efficiency of automatic parking can be effectively improved, and user experience can be improved.

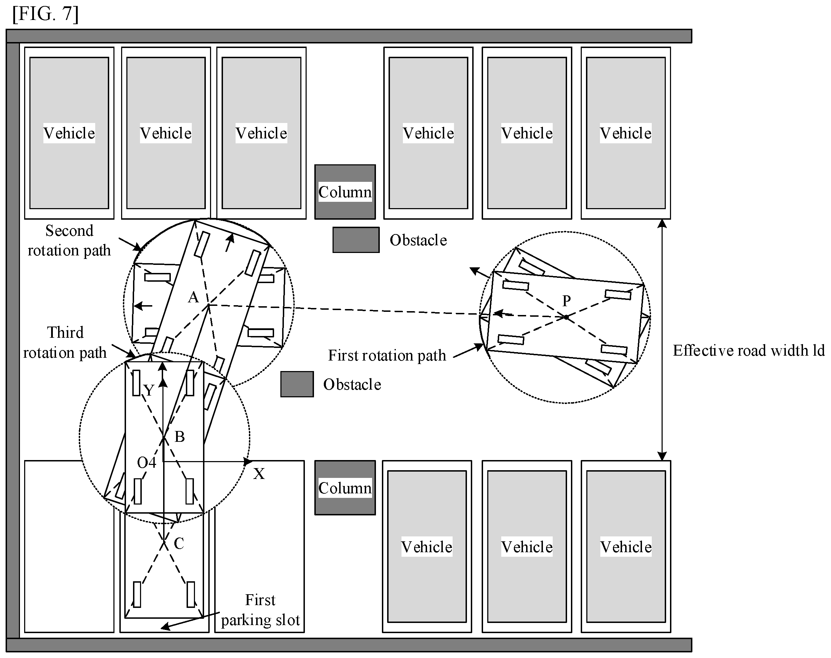

Example 3: referring to FIG. 7, FIG. 7 is a diagram of a possible target parking path according to another embodiment of this application. The current pose information of the vehicle includes the current pose point of the vehicle, the current pose point is a pose point (for example, a point P in FIG. 7) at which the center of mass of the vehicle is currently located, and the target parking path includes a third pre-parking-in path and a third parking-in path. The third pre-parking-in path includes a first rotation path, a first conventional traveling path, a second rotation path, and a second conventional traveling path. The first rotation path is a path (for example, a first rotation path in FIG. 7) formed by the vehicle rotating around the center of mass (namely, the current pose point) of the vehicle at the current pose point. After first rotation of the vehicle, a direction in which the vehicle moves forward is the same as a direction of a connection line between the current pose point and a first parking-in preparation pose point (for example, in FIG. 7, a direction in which the vehicle moves forward is the same as a direction of a vector PA). The first parking-in preparation pose point (for example, a point A in FIG. 7) is located on either side of the centerline of the first parking slot. The first conventional traveling path belongs to the conventional traveling path, and the first conventional traveling path is a path (for example, a path PA in FIG. 7) formed from the current pose point to the first parking-in preparation pose point after the first rotation of the vehicle. In other words, the first conventional traveling path is a straight path from the current pose point to the first parking-in preparation pose point.

The second rotation path is a path (for example, a second rotation path in FIG. 7) formed by the vehicle rotating around the center of mass of the vehicle (namely, the first parking-in preparation pose point) for a second time at the first parking-in preparation pose point. After the second rotation, a direction in which the vehicle moves forward is the same as a direction of a connection line between a second parking-in preparation pose point and the first parking-in preparation pose point (for example, in FIG. 7, a direction in which the vehicle moves forward is the same as a direction of a vector BA). The second conventional traveling path belongs to the conventional traveling path, and the second conventional traveling path is a path (for example, a path AB in FIG. 7) formed by the vehicle traveling straight from the first parking-in preparation pose point to the second parking-in preparation pose point after the second rotation. The second parking-in preparation pose point (for example, a point B in FIG. 7) is located on the centerline of the first parking slot. In other words, the second conventional traveling path is a straight path from the first parking-in preparation pose point to the second parking-in preparation pose point.

The second parking-in path includes a third rotation path and a third conventional traveling path, and the third rotation path is a path (for example, a third rotation path in FIG. 7) formed by the vehicle rotating around the center of mass of the vehicle (namely, the second parking-in preparation pose point) for a third time at the second parking-in preparation pose point. After the third rotation, a direction in which the vehicle moves forward is the same as a direction of a connection line between a target pose point and the second parking-in preparation pose point (for example, in FIG. 7, a direction in which the vehicle moves forward is the same as a direction of a vector CB). The third conventional traveling path belongs to the conventional traveling path, and the third conventional traveling path is a path (for example, a path BC in FIG. 7) formed by the vehicle traveling straight from the second parking-in preparation pose point to the target pose point after the third rotation. The target pose point is a pose point (for example, a point C in FIG. 7) at which a center of the first parking slot is located. In other words, the third conventional traveling path is a straight path from the second parking-in preparation pose point to the target pose point.

For example, as shown in FIG. 7, in FIG. 7, the location information of the first parking slot may be represented by using a Cartesian coordinate system. For example, the Cartesian coordinate system is established by using the center of the parking-in edge of the first parking slot as an origin O4, and location information of the point C may be represented as (*x_{C},y_{C},θ_{C}*). The processing apparatus obtains the current pose information of the vehicle, and obtains, from the current pose information of the vehicle, location information of the pose point at which the center of mass of the vehicle is currently located. For example, location information of the point P in FIG. 7 is (*x_{P},y_{P},θ_{P}*). The processing apparatus plans the first rotation path at a current location of the vehicle, namely, the first rotation path (for example, the first rotation path in FIG. 7) formed by the vehicle rotating around the point P at the point P by a first angle with a first rotation radius, so that after the first rotation of the vehicle, the direction in which the vehicle moves forward is the same as the direction of the vector PA. For related parameters, refer to the foregoing descriptions. The first rotation radius *Rᵥₒₜ* needs to satisfy: during rotation around a first rotation center, namely, the point P, there is no obstacle in a range of the rotation radius. The first parking-in preparation pose point (for example, the point A in FIG. 7) is located on either side of the centerline of the first parking slot. A lateral distance between the first parking-in preparation pose point A and the center of the parking-in edge of the first parking slot meets a first condition, and a longitudinal distance between the first parking-in preparation pose point A and the center of the parking-in edge of the first parking slot meets a second condition. That is, a horizontal coordinate of the point A meets the first condition, and a vertical coordinate of the point A meets the second condition. Location information of the point A is (*x_{A},y_{A},θ_{A}*). For the first condition and the second condition, refer to the foregoing related descriptions. Optionally, the first parking-in preparation pose point A may be determined based on the method in the foregoing Implementation 1 to Implementation 4. The first angle *θᵥₒₜ* may be obtained through calculation according to the foregoing Formula (9).

The processing apparatus plans the straight path, namely, the first conventional traveling path (for example, the path PA in FIG. 7), formed from the current pose point to the first parking-in preparation pose point after the first rotation of the vehicle. The first conventional traveling path belongs to the conventional traveling path.

Further, the processing apparatus plans the second rotation path at the first parking-in preparation pose point, namely, the second rotation path (for example, the second rotation path in FIG. 7) formed by the vehicle rotating around the point A at the point A by a second angle with the first rotation radius, so that after the second rotation of the vehicle, the direction in which the vehicle moves forward is the same as the direction of the vector BA. The second rotation path satisfies: during the second rotation around the first parking-in preparation pose point (namely, the point A in FIG. 7), there is no obstacle in a range of the rotation radius. For details about related parameters, refer to the foregoing descriptions.

The second angle *θᵥₒₜ* may be calculated according to the following Formula (11): ${θ}_{vot} = {θ}_{BA} - {θ}_{A}$

*θ_{BA}* indicates a vector angle of the vector *B̅ A̅*, and *θ_{A}* indicates an attitude angle of the vehicle at the point A.

The processing apparatus plans the straight path, namely, the second conventional traveling path (for example, the path AB in FIG. 7) formed from the first parking-in preparation pose point to the second parking-in preparation pose point after the second rotation of the vehicle. The second conventional traveling path belongs to the conventional traveling path.

Still further, the processing apparatus plans the third rotation path at the second parking-in preparation pose point, namely, the third rotation path (for example, the third rotation path in FIG. 7) formed by the vehicle rotating around the point B at the point B by a third angle with the first rotation radius, so that after the third rotation of the vehicle, the direction in which the vehicle moves forward is the same as the direction of the vector CB. The third rotation path satisfies: during the third rotation around the second parking-in preparation pose point (namely, the point B in FIG. 7), there is no obstacle in a range of the rotation radius. For details about related parameters, refer to the foregoing descriptions. The second parking-in preparation pose point (for example, the point B in FIG. 7) is located on the centerline of the first parking slot, and a longitudinal distance between the second parking-in preparation pose point B and the center of the parking-in edge of the first parking slot meets a third condition. That is, a vertical coordinate of the point B meets the third condition. Location information of the point B is (*x_{B},y_{B},θ_{B}*). The third condition is *y_{A}*>*y_{B}>y_{C}.*

The third angle *θᵥₒₜ* may be calculated according to the following Formula (12): ${θ}_{vot} = {θ}_{CB} - {θ}_{BA}$

*θ_{CB}* indicates a vector angle of the vector *̅C̅ B̅*̅, and *θ_{BA}* indicates the vector angle of the vector *B̅ A̅.*

The processing apparatus plans the straight path, namely, the third conventional traveling path (for example, the path BC in FIG. 7) formed from the second parking-in preparation pose point to the target pose point after the third rotation of the vehicle. The third conventional traveling path belongs to the conventional traveling path.

In this way, through the second rotation and the third rotation, the attitude angle of the vehicle is kept consistent with an attitude angle of the parking slot. During subsequent parking, the vehicle can travel along a straight line to be directly parked in a target parking slot, so that efficiency of automatic parking can be effectively improved, and user experience can be improved.

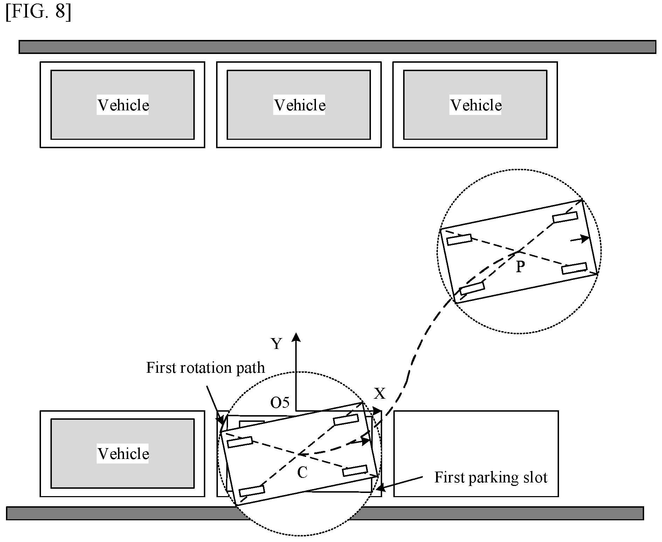

Example 4: referring to FIG. 8, FIG. 8 is a diagram of a possible target parking path according to another embodiment of this application. The current pose information of the vehicle includes the current pose point of the vehicle, the current pose point is a pose point (for example, a point P in FIG. 8) at which the center of mass of the vehicle is currently located, and the target parking path includes a fourth pre-parking-in path and a fourth parking-in path. The fourth pre-parking-in path includes a first conventional traveling path. The first conventional traveling path belongs to the conventional traveling path, and the first conventional traveling path is a path (for example, a path PC in FIG. 8) formed by the vehicle from the current pose point to a first parking-in preparation pose point. The first parking-in preparation pose point is a pose point (for example, a point C in FIG. 6) at which a center of the first parking slot is located.

The second parking-in path includes a first rotation path, and the first rotation path is a path (for example, a first rotation path in FIG. 8) formed by the vehicle rotating around the center of mass (namely, the first parking-in preparation pose point) of the vehicle at the first parking-in preparation pose point. After rotation, an attitude angle of the vehicle is the same as an attitude angle of the first parking slot (for example, in FIG. 8, an attitude angle of the vehicle is the same as the attitude angle of the first parking slot).

For example, as shown in FIG. 8, in FIG. 8, the location information of the first parking slot may be represented by using a Cartesian coordinate system. For example, the Cartesian coordinate system is established by using the center of the parking-in edge of the first parking slot as an origin O5, and location information of the point C may be represented as (*x_{C},y_{C},θ_{C}*). The processing apparatus obtains the current pose information of the vehicle, and obtains, from the current pose information of the vehicle, location information of the pose point at which the center of mass of the vehicle is currently located. For example, location information of the point P in FIG. 8 is (*xₚ,yₚ,θₚ*). The processing apparatus plans the first conventional traveling path PC for the vehicle to travel from the point P to the first parking-in preparation pose point C, where the first conventional traveling path PC conforms to the kinematic constraint and the nonholonomic dynamic constraint.

In a possible implementation, methods in which the processing apparatus plans the first conventional traveling path PC may include: an Ackerman turning geometry method, a search-based path planning algorithm, a path planning algorithm based on sampling and search, and other algorithms.

Further, the processing apparatus plans the first parking-in path, where the first parking-in path includes the first rotation path. The first rotation path is a rotation path formed by the vehicle rotating around the first parking-in preparation pose point C at the first parking-in preparation pose point C by a first angle with a first rotation radius *Rᵥₒₜ*. The first rotation radius *Rᵥₒₜ* is related to a length of the vehicle, a width of the vehicle, and a safety distance of the vehicle, and the first rotation radius *Rᵥₒₜ* needs to satisfy: during rotation around the first parking-in preparation pose point C, there is no obstacle in a range of the rotation radius. The first angle is related to the attitude angle of the first parking slot and an attitude angle of the vehicle when the vehicle travels to the first parking-in preparation pose point C. For related descriptions, refer to the foregoing descriptions.

In this way, through rotation, the attitude angle of the vehicle is kept consistent with the attitude angle of the parking slot, so that efficiency of automatic parking can be effectively improved, and user experience can be improved.

S303: the processing apparatus controls, based on the target parking path, the vehicle to perform parking.

Optionally, one motor may control movement of one or more wheels of the vehicle.

For example, one motor controls movement of one wheel. When a parking path of the vehicle includes a rotation path, each motor may control a corresponding wheel to rotate by a specific angle. In this way, the vehicle can rotate around a specific point by the specific angle with a rotation radius, to travel along the rotation path, so that in a scenario such as a narrow and small space, efficiency and safety of automatic parking are effectively improved, and user experience is improved.

Optionally, the processing apparatus may further track a parking trajectory with reference to the target parking path, to execute a preferential specific parking trajectory, and perform obstacle collision detection in real time based on a perceived vehicle status, to perform decision-making and avoidance when there is an obstacle collision risk.

In the embodiment shown in FIG. 3, the processing apparatus may obtain the location information of the first parking slot and the surrounding environmental information of the first parking slot, and plan the target parking path of the vehicle based on the location information of the first parking slot and the surrounding environmental information of the first parking slot. The target parking path may include the rotation path, so that the vehicle can rotate around the center of mass of the vehicle. In this way, in a case of a limited space or a small effective road width, the path planned by the processing apparatus is different from an Ackerman turning geometry-based conventional path planning method in that in this solution, location adjustment can be implemented with a turning radius approaching zero. In a scenario in which a right-front-left-rear adjustment method and a left-front-right-rear adjustment method cannot be implemented, the attitude angle of the vehicle can still be adjusted, which effectively improves efficiency and safety of automatic parking, and improves user experience.

This application further provides a pulling-out method. When a vehicle parked in a first parking slot needs to pull out of a first parking slot, a processing apparatus may obtain information of a current pose point of the vehicle, pulling-out location information, and surrounding environment information of the first parking slot, determine a target pulling-out path of the vehicle based on the information of the current pose point of the vehicle, the pulling-out location information, and the surrounding environmental information of the first parking slot, and control, based on the target pulling-out path, the vehicle to pull out of the first parking slot. The target pulling-out path includes a conventional traveling path and a rotation path. The conventional traveling path includes at least one of a straight traveling path or a curved traveling path. The rotation path is a path formed by the vehicle rotating around a center of mass of the vehicle, and rotation of the vehicle is implemented by controlling a plurality of wheels by a plurality of motors respectively.

Specifically, the processing apparatus may determine an available parking space of the vehicle based on information of an obstacle near the first parking slot, determine one or more rotation locations in the available parking space, and determine a rotation path formed by the vehicle rotating around the center of mass of the vehicle at the one or more rotation locations. The processing apparatus plans a third conventional traveling path based on the information of the current pose point of the vehicle and a rotation location of the one or more rotation locations that is closest to the current pose point, and plans a fourth conventional traveling path based on the pulling-out location information and a rotation location of the one or more rotation locations that is closest to a pulling-out location.

Optionally, determining the one or more rotation locations includes: the processing apparatus determines at least one available rotation space in the available parking space based on a size of the vehicle, and determines one rotation location in each of the at least one available rotation space.

Optionally, when there is one determined rotation location, the target pulling-out path includes the third conventional traveling path, the fourth conventional traveling path, and a rotation path formed by rotating at a first rotation location.

Optionally, when there are a plurality of rotation locations, a conventional traveling path between the plurality of rotation locations is planned. The target pulling-out path includes conventional traveling paths and rotation paths. The conventional traveling paths include the third conventional traveling path, the fourth conventional traveling path, and the conventional traveling path between the plurality of rotation locations. There are a plurality of rotation paths, that is, rotation paths formed by rotating at the plurality of rotation locations.

For example, the pulling-out location information may be a location in a driving lane, and the current pose point of the vehicle may be a center of the first parking slot. A rotation location closest to the center of the first parking slot is selected to plan the third conventional traveling path, and a rotation location closest to the location in the driving lane is selected to plan the fourth conventional traveling path. The surrounding environmental information of the first parking slot is configured to indicate information of the obstacle near the first parking slot, and the rotation path satisfies no obstacle being in a range of the rotation path.

Optionally, if it is detected that the information of the obstacle near the first parking slot during pulling-out path planning does not change compared with information of an obstacle near the first parking slot during parking path planning, the processing apparatus may interchange a start location and an end location of a target parking path to obtain the target pulling-out path. "Interchanging a start location and an end location" herein means that the start location of the target parking path is used as an end location of the target pulling-out path, and the end location of the target parking path is used as a start location of the target pulling-out path. In other words, the vehicle may directly pull out of the parking slot based on the target parking path corresponding to previous parking-in.

Optionally, if it is detected that the information of the obstacle around the first parking slot during pulling-out path planning changes compared with information of an obstacle around the first parking slot during parking path planning, refer to the foregoing method of determining the target parking path to determine the target pulling-out path. Details are not described in this application.

In this way, on the basis of supporting the conventional traveling path, the rotation path formed by the vehicle rotating in place around the center of mass can be implemented, which greatly improves flexibility, passability, and a movement capability of the vehicle, to better cope with a narrow parking environment, so that a user pulls out of the parking slot. This improves user experience.

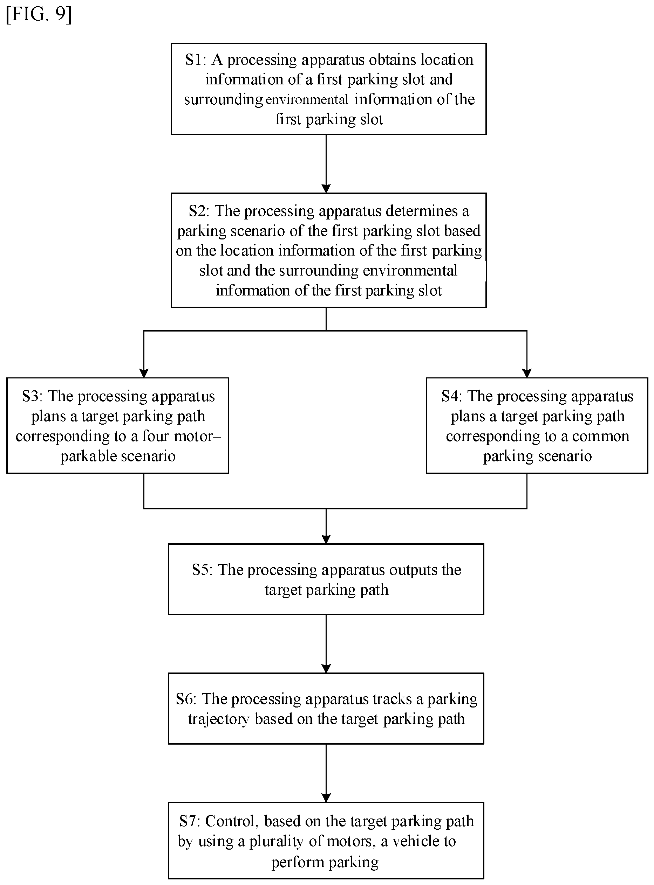

The embodiment shown in FIG. 3 includes a plurality of possible solutions. For ease of understanding, the following describes one of the possible solutions. It will be understood that for some terms, logic, and the like in the solution shown in FIG. 9, refer to the embodiment shown in FIG. 3.

Referring to FIG. 9, FIG. 9 is a schematic flowchart of a parking method according to another embodiment of this application. The method includes the following operations.

S1: the processing apparatus obtains location information of a first parking slot and surrounding environmental information of the first parking slot.

Optionally, surrounding environmental information of a parking slot in a parking lot is configured to indicate information of an obstacle near the parking slot in the parking lot. For example, the surrounding environmental information of the parking slot in the parking lot may indicate a quantity of parking slots in the parking lot, whether a vehicle is parked in each parking slot, obstacles (for example, a stone column, a stake, and a wall) in the parking lot, location information of the obstacles in the parking lot, and the like. The location information of the first parking slot and the location information of the obstacle in the parking lot may be represented in a form of point, line, bounding box, or the like.

S2: the processing apparatus determines a parking scenario of the first parking slot based on the location information of the first parking slot and the surrounding environmental information of the first parking slot.

Optionally, the parking scenario may be a common parking scenario or a four motor-parkable scenario. For example, the processing apparatus determines, based on the location information of the first parking slot and the surrounding environmental information of the first parking slot, whether the parking scenario of the first parking slot is a four motor-parkable scenario. The four motor-parkable scenario includes but is not limited to a typical dead-end road scenario or narrow passage scenario. Optionally, the processing apparatus may output a parking type of the first parking slot. The parking type includes but is not limited to a vertical parking type, a horizontal parking type, a diagonal parking type, a fishbone parking type, or the like.

If the parking scenario is a four motor-parkable scenario, an operation S3 is performed. If the parking scenario is a common parking scenario, an operation S4 is performed.

S3: the processing apparatus plans a target parking path corresponding to the four motor-parkable scenario.

Optionally, the processing apparatus may plan the target parking path through one or more of the foregoing Implementation 1, Implementation 2, and Implementation 3.

S4: the processing apparatus plans a target parking path corresponding to the common parking scenario.

Optionally, the processing apparatus may plan a conventional traveling path as the target parking path.

S5: the processing apparatus outputs the target parking path.

Optionally, for a parking scenario to which both the four motor-parkable scenario and the common parking scenario are applicable, the processing apparatus may perform target parking path planning for both, perform preliminary screening of pre-parking time, and preferentially select a planning result with shorter parking time as the target parking path for output.

S6: the processing apparatus tracks a parking trajectory based on the target parking path.

Optionally, the processing apparatus executes the preferential specific target parking path, and performs collision detection on the obstacle in real time based on a perceived status, to perform avoidance and decision-making on a situation in which there is an obstacle risk.

S7: control, based on the target parking path by using a plurality of motors, the vehicle to perform parking.

In the embodiment shown in FIG. 9, when planning a parking path, the processing apparatus selects an appropriate planning method based on the parking scenario to plan the target parking path, so that the planned target parking path more conforms to an actual application scenario of the vehicle, which effectively improves efficiency and safety of automatic parking, and improves user experience.

The methods in embodiments of this application are described in detail above. Apparatuses in embodiments of this application are provided below.

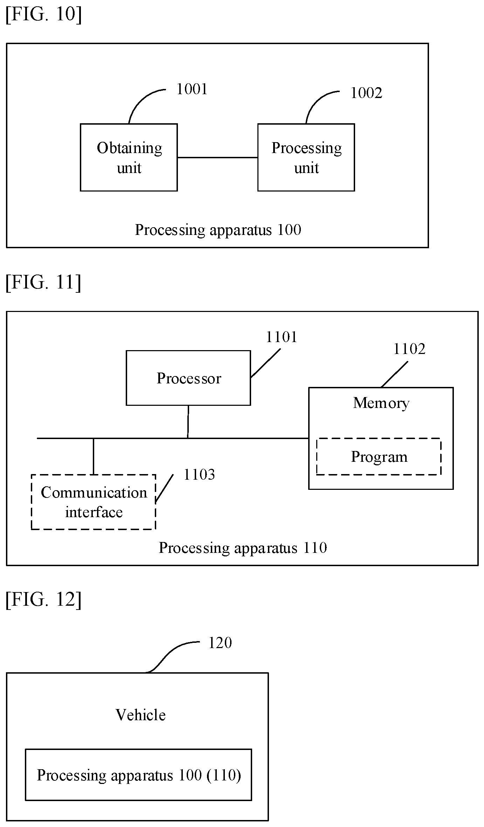

Referring to FIG. 10, FIG. 10 is a diagram of a structure of a processing apparatus according to an embodiment of this application. The processing apparatus 100 is included in a vehicle. The vehicle includes a plurality of wheels and a plurality of motors, each of the plurality of wheels is controlled by one of the plurality of motors, and the processing apparatus 100 includes an obtaining unit 1001 and a processing unit 1002. The processing apparatus 100 is configured to implement the foregoing parking method, for example, the parking method in the embodiment shown in FIG. 3 or FIG. 9.

It may be noted that division into a plurality of units is merely logical division based on functions, and is not intended to limit a specific structure of the processing apparatus 100. During specific implementation, some functional modules may be subdivided into more functional modules that are smaller, and some functional modules may alternatively be combined into one functional module.

In a possible implementation, the obtaining unit 1001 is configured to obtain location information of a first parking slot and surrounding environmental information of the first parking slot.

The processing unit 1002 is configured to:
determine a target parking path of the vehicle based on the information of the current pose point of the vehicle, the location information of the first parking slot, and the surrounding environmental information of the first parking slot, where the target parking path includes a conventional traveling path and a rotation path, the conventional traveling path includes a straight traveling path and/or a curved traveling path, the rotation path is a path formed by the vehicle rotating around a center of mass of the vehicle, and rotation of the vehicle is implemented by controlling the plurality of wheels by the plurality of motors respectively; and
control, based on the target parking path, the vehicle to perform parking. In a possible implementation, a turning radius corresponding to the curved traveling path is greater than or equal to a minimum turning radius of the vehicle, a turning radius corresponding to the rotation path is less than the minimum turning radius of the vehicle, and the minimum turning radius is a turning radius obtained when the vehicle performs steering control with a front wheel at a maximum steering angle and four wheels rotating in a same direction.

In a possible implementation, the surrounding environmental information of the first parking slot is configured to indicate information of an obstacle near the first parking slot, and the rotation path satisfies no obstacle being in a range of the rotation path.

In a possible implementation, the processing unit 1002 is further configured to:
determine an available parking space of the vehicle based on the information of the obstacle near the first parking slot;
determine at least one available rotation space in the available parking space based on a size of the vehicle;
determine one or more rotation locations in the at least one available rotation space, and determine a rotation path formed by the vehicle rotating around the center of mass of the vehicle at the one or more rotation locations;
plan a first conventional traveling path based on the information of the current pose point of the vehicle and a rotation location of the one or more rotation locations that is closest to the current pose point;
plan a second conventional traveling path based on a location of the first parking slot and a rotation location of the one or more rotation locations that is closest to the location of the first parking slot; and
when there are a plurality of rotation locations, plan a conventional traveling path between the plurality of rotation locations.

In a possible implementation, the processing unit 1002 is further configured to: input the information of the current pose point of the vehicle, the location information of the first parking slot, and the surrounding environment information of the first parking slot to a rotation parking-in planning model, where the rotation parking-in planning model is applied to plan a parking path based on the available parking space, the rotation parking-in planning model is obtained through training based on training samples, and the training samples include pose point data of the vehicle, location data of a parking slot, surrounding environment data of the parking slot, and evaluation information of the parking path; and
the obtaining unit is further configured to obtain the target parking path output by the rotation parking-in planning model.

In a possible implementation, the processing unit 1002 is further configured to:
determine a first rotation location in the at least one available rotation space;
plan the first conventional traveling path and a first rotation path based on the information of the current pose point of the vehicle and the first rotation location;
determine a conventional traveling path from an end point of the first rotation path to the first parking slot;
if the conventional traveling path from the end point of the first rotation path to the first parking slot is unable to be determined, determine a second rotation location in the at least one available rotation space;
plan the second conventional traveling path and a second rotation path based on the end point of the first rotation path and the second rotation location;
determine a conventional traveling path from an end point of the second rotation path to the first parking slot; and
repeat the foregoing operations until a conventional traveling path from an end point of the rotation path to the first parking slot is determined.

In a possible implementation, the processing unit 1002 is further configured to:
plan a first target parking path based on the available parking space of the vehicle, the size of the vehicle, and the information of the current pose point of the vehicle, where the first target parking path includes one conventional traveling path and one rotation path;
when the first target parking path is unable to be planned, plan a second target parking path based on the available parking space of the vehicle, the size of the vehicle, and the information of the current pose point of the vehicle, where the second target parking path includes two conventional traveling paths and two rotation paths;
when the first target parking path and the second target parking path are unable to be planned, plan a third target parking path based on the available parking space of the vehicle, the size of the vehicle, and the information of the current pose point of the vehicle, where the third target parking path includes three conventional traveling paths and three rotation paths; and
when the first target parking path, the second target parking path, and the third target parking path are unable to be planned, plan a fourth target parking path based on the available parking space of the vehicle, the size of the vehicle, and the information of the current pose point of the vehicle, where the fourth target parking path includes two conventional traveling paths and one rotation path.

In a possible implementation,
the current pose point is a pose point at which a rear axle center of the vehicle is currently located, and the target parking path includes a first pre-parking-in path and a first parking-in path, where
the first pre-parking-in path includes a first conventional traveling path and a first rotation path, the first conventional traveling path is a path formed from the current pose point to a first parking-in preparation pose point, and the first parking-in preparation pose point is a pose point at which the rear axle center of the vehicle is located before the vehicle rotates;
the first rotation path is a path formed by rotating around the center of mass of the vehicle at the first parking-in preparation pose point; and
the first parking-in path is a path formed from a second parking-in preparation pose point to a target pose point, the second parking-in preparation pose point is a pose point at which the rear axle center of the vehicle is located after the vehicle rotates, and the target pose point is a pose point at which the rear axle center of the vehicle is located after the vehicle is parked into the first parking slot.

In a possible implementation,
a lateral distance between the first parking-in preparation pose point and a center of a parking-in edge of the first parking slot meets a first condition;
a location of the center of mass of the vehicle is related to a location of the first parking-in preparation pose point; and
a rotation radius of the first rotation path is related to a length of the vehicle, a width of the vehicle, and a safety distance of the vehicle.

In a possible implementation, the processing unit 1002 is further configured to:
determine a plurality of parking-in paths based on the target pose point, a kinematic constraint, and a nonholonomic dynamic constraint; and
determine the first parking-in path based on the plurality of parking-in paths, where the first parking-in path is a parking-in path with minimum cost in the plurality of parking-in paths.

In a possible implementation, the current pose point is a pose point at which the center of mass of the vehicle is currently located, and the target parking path includes a second pre-parking-in path and a second parking-in path, where
the second pre-parking-in path includes a first rotation path and a first conventional traveling path, the first rotation path is a path formed by rotating around the center of mass of the vehicle at the current pose point, the first conventional traveling path is a straight path from the current pose point to the first parking-in preparation pose point, and the first parking-in preparation pose point is located on a centerline of the first parking slot; and
the second parking-in path includes a second rotation path and a second conventional traveling path, the second rotation path is a path formed by rotating around the center of mass of the vehicle at the first parking-in preparation pose point, the second conventional traveling path is a straight path from the first parking-in preparation pose point to a target pose point, and the target pose point is located at a center of the first parking slot.

In a possible implementation,
a longitudinal distance between the first parking-in preparation pose point and a center of a parking-in edge of the first parking slot meets a second condition; and
rotation radii of the first rotation path and the second rotation path are related to a length of the vehicle, a width of the vehicle, and a safety distance of the vehicle.

In a possible implementation, the current pose point is a pose point at which the center of mass of the vehicle is currently located, and the target parking path includes a third pre-parking-in path and a third parking-in path, where
the third pre-parking-in path includes a first rotation path, a first conventional traveling path, a second rotation path, and a second conventional traveling path, the first rotation path is a path formed by rotating around the center of mass of the vehicle at the current pose point, the first conventional traveling path is a conventional traveling path from the current pose point to a first parking-in preparation pose point, and the first parking-in preparation pose point is located on either side of a centerline of the first parking slot;
the second rotation path is a path formed by rotating around the center of mass of the vehicle at the first parking-in preparation pose point, the second conventional traveling path is a conventional traveling path from the first parking-in preparation pose point to a second parking-in preparation pose point, and the second parking-in preparation pose point is located on the centerline of the first parking slot; and
the third parking-in path includes a third rotation path and a third conventional traveling path, the third rotation path is a path formed by rotating around the center of mass of the vehicle at the second parking-in preparation pose point, the third conventional traveling path is a conventional traveling path from the second parking-in preparation pose point to a target pose point, and the target pose point is located at a center of the first parking slot.

In a possible implementation,
a lateral distance between the first parking-in preparation pose point and a center of a parking-in edge of the first parking slot meets a first condition;
a longitudinal distance between the first parking-in preparation pose point and the center of the parking-in edge of the first parking slot meets a second condition;
a longitudinal distance between the second parking-in preparation pose point and the center of the parking-in edge of the first parking slot meets a third condition; and
rotation radii of the first rotation path, the second rotation path, and the third rotation path are related to a length of the vehicle, a width of the vehicle, and a safety distance of the vehicle.

In a possible implementation, the current pose point is a pose point at which the center of mass of the vehicle is currently located.

The target parking path includes a fourth pre-parking-in path and a fourth parking-in path, where
the fourth pre-parking-in path includes a first conventional traveling path, the first conventional traveling path is a path formed by traveling from the current pose point to a first parking-in preparation pose point, and the first parking-in preparation pose point is located at a center of the first parking slot; and
the fourth parking-in path includes a first rotation path, the first rotation path is a path formed by rotating around the center of mass of the vehicle at the first parking-in preparation pose point, and after rotation, an attitude angle of the vehicle is the same as an attitude angle of the first parking slot, a rotation radius of the first rotation path is related to a length of the vehicle, a width of the vehicle, and a safety distance of the vehicle.

It will be noted that the foregoing modules (the obtaining unit 1001 and the processing unit 1002) are configured to perform related operations of the foregoing method. For example, the obtaining unit 1001 is configured to perform related content of S301, and the processing unit 1002 is configured to perform related content of S302 and S303.

FIG. 11 is a diagram of a structure of a processing apparatus according to another embodiment of this application. The processing apparatus is a device with a processing capability. The device herein may be a physical device, for example, a server (for example, a rack server) or a host, or may be a virtual device, for example, a virtual machine or a container.

As shown in FIG. 11, the processing apparatus 110 includes a processor 1101, a memory 1102, and one or more programs, and may include a communication interface 1103. It will be understood that a quantity of processors and a quantity of memories in the processing apparatus 110 are not limited in this application.

The processor 1101 is a module for performing an operation, and may include a central processing unit (CPU), a graphics processing unit (GPU), a microprocessor (MP), a digital signal processor (DSP), a microcontroller unit (MCU), or one or more integrated circuits configured to control execution of a program in the foregoing solutions.

The memory 1102 is configured to provide storage space. The storage space optionally stores application data, user data, an operating system, a computer program, and the like. The memory 1102 may include but is not limited to a read-only memory (ROM) or another type of static storage device capable of storing static information and instructions, a random access memory (RAM) or another type of dynamic storage device capable of storing information and instructions, an electrically erasable programmable read-only memory (EEPROM), a compact disc read-only memory (CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer.

The memory 1102 may independently exist and is connected to the processor 1101 through a bus. Alternatively, the memory 1102 may be integrated with the processor 1101.

The communication interface 1103 is configured to provide information input or output for at least one processor; and/or the communication interface 1103 may be configured to receive data sent from the outside and/or send data to the outside. The communication interface 1103 may be a wired link interface including an Ethernet cable and the like, or may be a wireless link (Wi-Fi, Bluetooth, universal wireless transmission, another wireless communication technology, and the like) interface. Optionally, the communication interface 1103 may further include a transmitter (for example, a radio frequency transmitter or an antenna) coupled to the interface, a receiver, or the like.

In embodiments of this application, the one or more programs are stored in the memory 1102 in a form of program code, and are configured to be executed by the processor 1101. The program includes instructions for implementing the operations in the foregoing parking method, for example, the parking method shown in FIG. 3 or FIG. 9. In other words, the memory 1102 stores executable instructions, and the processor 1101 executes the executable instructions to implement the foregoing parking method, for example, the parking method in the embodiment in FIG. 3. In other words, the memory 1102 stores the instructions for performing the parking method.

Alternatively, the memory 1102 stores the executable instructions, and the processor 1101 executes the executable instructions to separately implement functions of one or more units (or devices) of the foregoing obtaining unit and processing unit, to implement the parking method.

An embodiment of this application further provides a vehicle. As shown in FIG. 12, the vehicle 120 includes a plurality of wheels, a plurality of motors, and the processing apparatus 100 or the processing apparatus 110. The vehicle is configured to implement the foregoing parking method, for example, the parking method in the embodiment in FIG. 3 or FIG. 9.

An embodiment of this application further provides a computer program product including instructions. The computer program product may be software or a program product that includes the instructions and that can be run on a compute device or stored in any usable medium. The computer program instructions are for implementing the foregoing parking method, for example, the parking method in the embodiment in FIG. 3 or FIG. 9.

An embodiment of this application further provides a computer-readable storage medium. The computer-readable storage medium includes instructions, and the instructions are for implementing the foregoing parking method, for example, the parking method in the embodiment in FIG. 3 or FIG. 9.

The computer-readable storage medium may be any usable medium that can be stored by a processing apparatus, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like.

In embodiments of this application, the term such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the term such as "example" or "for example" is intended to present a related concept in a specific way.

In embodiments of this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: only A exists, both A and B exist, and only B exists, where A and B may be singular or plural. The character "/" generally indicates an "or" relationship between the associated objects.

In addition, unless otherwise specified, ordinal numbers such as "first" and "second" in embodiments of this application are used to distinguish between a plurality of objects, but are not intended to limit an order, a time sequence, priorities, or degrees of importance of the plurality of objects. For example, the first parking-in path and the second parking-in path are merely for ease of description, and do not indicate different deployment sequences, degrees of importance, and the like of the first parking-in path and the second parking-in path.

A person of ordinary skill in the art will understand that all or some of the operations of the foregoing embodiments may be implemented by hardware, or may be implemented by a program instructing related hardware. The program may be stored in a computer-readable storage medium. The storage medium may be a read-only memory, a magnetic disk, an optical disc, or the like.

Finally, it will be noted that the foregoing embodiments are merely intended for describing the technical solutions of this application other than limiting this application. Although this application is described in detail with reference to the foregoing embodiments, a person of ordinary skill in the art will understand that they may still make modifications to the technical solutions described in the foregoing embodiments or make equivalent replacements to some technical features thereof, without departing from the protection scope of the technical solutions of embodiments of this application.

## Claims

1. A parking method, wherein the method is applied to control parking of a vehicle, the vehicle comprises a plurality of wheels and a plurality of motors, each of the plurality of wheels is controlled by one of the plurality of motors, and the parking method comprises:
obtaining information of a current pose point of the vehicle, location information of a first parking slot, and surrounding environmental information of the first parking slot;
determining (S302) a target parking path of the vehicle based on the information of the current pose point of the vehicle, the location information of the first parking slot, and the surrounding environmental information of the first parking slot, wherein the target parking path comprises a conventional traveling path and a rotation path, the conventional traveling path comprises at least one of a straight traveling path or a curved traveling path, the rotation path is a path formed by the vehicle rotating around a center of mass of the vehicle, and rotation of the vehicle is implemented by controlling the plurality of wheels by the plurality of motors respectively; and
controlling (S303), based on the target parking path, the vehicle to perform parking.

2. The parking method according to claim 1, wherein a turning radius of the vehicle that corresponds to the curved traveling path is greater than or equal to a minimum turning radius of the vehicle, a turning radius of the vehicle that corresponds to the rotation path is less than the minimum turning radius of the vehicle, and the minimum turning radius is a turning radius obtained when the vehicle performs steering control with a front wheel at a maximum steering angle and four wheels rotating in a same direction.

3. The parking method according to claim 2, wherein the surrounding environment information of the first parking slot is configured to indicate information of an obstacle near the first parking slot, and the rotation path satisfies: no obstacle being in a range of the rotation path.

4. The parking method according to claim 3, the parking method further comprises:
determining an available parking space of the vehicle based on the information of the obstacle near the first parking slot;
determining at least one available rotation space in the available parking space based on a size of the vehicle;
determining one or more rotation locations in the at least one available rotation space, and determining a rotation path formed by the vehicle rotating around the center of mass of the vehicle at the one or more rotation locations;
planning a first conventional traveling path based on the information of the current pose point of the vehicle and a rotation location of the one or more rotation locations that is closest to the current pose point;
planning a second conventional traveling path based on a location of the first parking slot and a rotation location of the one or more rotation locations that is closest to the location of the first parking slot; and
when there are a plurality of rotation locations, planning a conventional traveling path between the plurality of rotation locations.

5. The parking method according to claim 4, wherein determining the target parking path of the vehicle based on the information of the current pose point of the vehicle, the location information of the first parking slot, and the surrounding environmental information of the first parking slot comprises:
inputting the information of the current pose point of the vehicle, the location information of the first parking slot, and the surrounding environmental information of the first parking slot to a rotation parking-in planning model, wherein the rotation parking-in planning model is applied to plan a parking path based on the available parking space, the rotation parking-in planning model is obtained through training based on training samples, and the training samples comprise pose point data of the vehicle, location data of a parking slot, surrounding environment data of the parking slot, and evaluation information of the parking path; and
obtaining the target parking path output by the rotation parking-in planning model.

6. The parking method according to claim 4, wherein the parking method further comprises:
determining a first rotation location in the at least one available rotation space; planning the first conventional traveling path and a first rotation path based on the information of the current pose point of the vehicle and the first rotation location;
determining a conventional traveling path from an end point of the first rotation path to the first parking slot;
if the conventional traveling path from the end point of the first rotation path to the first parking slot is unable to be determined, determining a second rotation location in the at least one available rotation space;
planning the second conventional traveling path and a second rotation path based on the end point of the first rotation path and the second rotation location;
determining a conventional traveling path from an end point of the second rotation path to the first parking slot; and
repeating foregoing operations until a conventional traveling path from an end point of the rotation path to the first parking slot is determined.

7. The parking method according to claim 4, wherein the parking method further comprises:
planning a first target parking path based on the available parking space of the vehicle, the size of the vehicle, and the information of the current pose point of the vehicle, wherein the first target parking path comprises one conventional traveling path and one rotation path;
when the first target parking path is unable to be planned, planning a second target parking path based on the available parking space of the vehicle, the size of the vehicle, and the information of the current pose point of the vehicle, wherein the second target parking path comprises two conventional traveling paths and two rotation paths;
when the first target parking path and the second target parking path are unable to be planned, planning a third target parking path based on the available parking space of the vehicle, the size of the vehicle, and the information of the current pose point of the vehicle, wherein the third target parking path comprises three conventional traveling paths and three rotation paths; and
when the first target parking path, the second target parking path, and the third target parking path are unable to be planned, planning a fourth target parking path based on the available parking space of the vehicle, the size of the vehicle, and the information of the current pose point of the vehicle, wherein the fourth target parking path comprises two conventional traveling paths and one rotation path.

8. The parking method according to any one of claims 1 to 7, wherein the current pose point is a pose point at which a rear axle center of the vehicle is currently located, and the target parking path comprises a first pre-parking-in path and a first parking-in path, wherein
the first pre-parking-in path comprises a first conventional traveling path and a first rotation path, the first conventional traveling path is a path formed from the current pose point to a first parking-in preparation pose point, the first parking-in preparation pose point is a pose point at which the rear axle center of the vehicle is located before the vehicle rotates, and the first rotation path is a path formed by rotating around the center of mass of the vehicle at the first parking-in preparation pose point; and
the first parking-in path is a path formed from a second parking-in preparation pose point to a target pose point, the second parking-in preparation pose point is a pose point at which the rear axle center of the vehicle is located after the vehicle rotates, and the target pose point is a pose point at which the rear axle center of the vehicle is located after the vehicle is parked into the first parking slot.

9. The parking method according to claim 8, wherein
a lateral distance between the first parking-in preparation pose point and a center of a parking-in edge of the first parking slot meets a first condition;
a location of the center of mass of the vehicle is related to a location of the first parking-in preparation pose point; and
a rotation radius of the first rotation path is related to a length of the vehicle, a width of the vehicle, and a safety distance of the vehicle.

10. The parking method according to claim 8 or 9, wherein the parking method further comprises:
determining a plurality of parking-in paths based on the target pose point, a kinematic constraint, and a nonholonomic dynamic constraint; and
determining a parking-in path with minimum cost in the plurality of parking-in paths as the first parking-in path.

11. The parking method according to any one of claims 1 to 7, wherein the current
pose point is a pose point at which the center of mass of the vehicle is currently located, and the target parking path comprises a second pre-parking-in path and a second parking-in path, wherein
the second pre-parking-in path comprises a first rotation path and a first conventional traveling path, the first rotation path is a path formed by rotating around the center of mass of the vehicle at the current pose point, the first conventional traveling path is a conventional traveling path from the current pose point to a first parking-in preparation pose point, and the first parking-in preparation pose point is located on a centerline of the first parking slot; and the second parking-in path comprises a second rotation path and a second conventional traveling path, the second rotation path is a path formed by rotating around the center of mass of the vehicle at the first parking-in preparation pose point, the second conventional traveling path is a conventional traveling path from the first parking-in preparation pose point to a target pose point, and the target pose point is located at a center of the first parking slot.

12. The parking method according to claim 11, wherein
a longitudinal distance between the first parking-in preparation pose point and a center of a parking-in edge of the first parking slot meets a second condition; and rotation radii of the first rotation path and the second rotation path are related to a length of the vehicle, a width of the vehicle, and a safety distance of the vehicle.

13. The parking method according to any one of claims 1 to 7, wherein the current pose point is a pose point at which the center of mass of the vehicle is currently located, and the target parking path comprises a third pre-parking-in path and a third parking-in path, wherein
the third pre-parking-in path comprises a first rotation path, a first conventional traveling path, a second rotation path, and a second conventional traveling path, the first rotation path is a path formed by rotating around the center of mass of the vehicle at the current pose point, the first conventional traveling path is a conventional traveling path from the current pose point to a first parking-in preparation pose point, the first parking-in preparation pose point is located on either side of a centerline of the first parking slot, the second rotation path is a path formed by rotating around the center of mass of the vehicle at the first parking-in preparation pose point, the second conventional traveling path is a conventional traveling path from the first parking-in preparation pose point to a second parking-in preparation pose point, and the second parking-in preparation pose point is located on the centerline of the first parking slot; and
the third parking-in path comprises a third rotation path and a third conventional traveling path, the third rotation path is a path formed by rotating around the center of mass of the vehicle at the second parking-in preparation pose point, the third conventional traveling path is a conventional traveling path from the second parking-in preparation pose point to a target pose point, and the target pose point is located at a center of the first parking slot.

14. The parking method according to claim 13, wherein
a lateral distance between the first parking-in preparation pose point and a center of a parking-in edge of the first parking slot meets a first condition;
a longitudinal distance between the first parking-in preparation pose point and the center of the parking-in edge of the first parking slot meets a second condition; a longitudinal distance between the second parking-in preparation pose point and the center of the parking-in edge of the first parking slot meets a third condition; and
rotation radii of the first rotation path, the second rotation path, and the third rotation path are related to a length of the vehicle, a width of the vehicle, and a safety distance of the vehicle.

15. The parking method according to any one of claims 1 to 7, wherein the current
pose point is a pose point at which the center of mass of the vehicle is currently located, and the target parking path comprises a fourth pre-parking-in path and a fourth parking-in path, wherein
the fourth pre-parking-in path comprises a first conventional traveling path, the first conventional traveling path is a path formed by traveling from the current pose point to a first parking-in preparation pose point, and the first parking-in preparation pose point is located at a center of the first parking slot; and
the fourth parking-in path comprises a first rotation path, the first rotation path is a path formed by rotating around the center of mass of the vehicle at the first parking-in preparation pose point, and after rotation, an attitude angle of the vehicle is the same as an attitude angle of the first parking slot, a rotation radius of the first rotation path is related to a length of the vehicle, a width of the vehicle, and a safety distance of the vehicle.

16. A pulling-out method, wherein the method is applied to control parking of a vehicle, the vehicle comprises a plurality of wheels and a plurality of motors, each of the plurality of wheels is controlled by one of the plurality of motors, and the pulling-out method comprises:
obtaining information of a current pose point of the vehicle, pulling-out location information, and surrounding environmental information of a first parking slot; determining a target pulling-out path of the vehicle based on the information of the current pose point of the vehicle, the pulling-out location information, and the surrounding environmental information of the first parking slot, wherein the target pulling-out path comprises a conventional traveling path and a rotation path, the conventional traveling path comprises at least one of a straight traveling path or a curved traveling path, the rotation path is a path formed by the vehicle rotating around a center of mass of the vehicle, and rotation of the vehicle is implemented by controlling the plurality of wheels by the plurality of motors respectively; and
controlling, based on the target pulling-out path, the vehicle to pull out of the first parking slot.

17. The pulling-out method according to claim 16, wherein a turning radius of the vehicle that corresponds to the curved traveling path is greater than or equal to a minimum turning radius of the vehicle, a turning radius of the vehicle that corresponds to the rotation path is less than the minimum turning radius of the vehicle, and the minimum turning radius is a turning radius obtained when the vehicle performs steering control with a front wheel at a maximum steering angle and four wheels rotating in a same direction.

18. The pulling-out method according to claim 16, wherein the surrounding environment information of the first parking slot is configured to indicate information of an obstacle near the first parking slot, and the rotation path satisfies: no obstacle being in a range of the rotation path; and the pulling-out method further comprises:
determining an available parking space of the vehicle based on the information of the obstacle around the first parking slot;
determining at least one available rotation space in the available parking space based on a size of the vehicle;
determining one or more rotation locations in the at least one available rotation space, and determining a rotation path formed by the vehicle rotating around the center of mass of the vehicle at the one or more rotation locations;
planning a third conventional traveling path based on the information of the current pose point of the vehicle and a rotation location of the one or more rotation locations that is closest to the current pose point;
planning a fourth conventional traveling path based on the pulling-out location information and a rotation location of the one or more rotation locations that is closest to a pulling-out location; and
when there are a plurality of rotation locations, planning a conventional traveling path between the plurality of rotation locations.

19. A processing apparatus (100), wherein the processing apparatus is assembled in a vehicle, the vehicle comprises a plurality of wheels and a plurality of motors, each of the plurality of wheels is controlled by one of the plurality of motors, and the processing apparatus comprises an obtaining unit (1001) and a processing unit (1002);
the obtaining unit is configured to obtain information of a current pose point of the vehicle, location information of a first parking slot, and surrounding environment information of the first parking slot; and
the processing unit is configured to:
determine a target parking path of the vehicle based on the information of the current pose point of the vehicle, the location information of the first parking slot, and the surrounding environmental information of the first parking slot, wherein the target parking path comprises a conventional traveling path and a rotation path, the conventional traveling path comprises at least one of a straight traveling path or a curved traveling path, the rotation path is a path formed by the vehicle rotating around a center of mass of the vehicle, and rotation of the vehicle is implemented by controlling the plurality of wheels by the plurality of motors respectively; and
control, based on the target parking path, the vehicle to perform parking.

20. A processing apparatus (110), wherein the processing apparatus is assembled in a vehicle, the vehicle comprises a plurality of wheels and a plurality of motors, each of the plurality of wheels is controlled by one of the plurality of motors, and the processing apparatus comprises a processor (1101) and a memory (1102), the memory stores a program, and the program comprises instructions for performing operations in the method according to any one of claims 1 to 18.

21. A vehicle (120), wherein the vehicle comprises a plurality of wheels, a plurality of motors, and the processing apparatus (100) according to claim 19 or the processing apparatus (110) according to claim 20, each of the plurality of wheels is controlled by one of the plurality of motors, the processing apparatus is electrically coupled to the plurality of motors, and the processing apparatus is configured to implement the method according to any one of claims 1 to 18.

22. A computer-readable storage medium, wherein the computer-readable storage medium stores a computer program, and the computer program comprises instructions for performing operations in the method according to any one of claims 1 to 18.
